# FASCICULE DE BREVET EUROPEEN

(11) **EP 3 388 657 B1**
(45) Date de publication et mention de la délivrance du brevet: **22.04.2020**
(21) Numéro de dépôt: 18167316.1
(22) Date de dépôt: 13.04.2018
(51) Int. Cl.: F02K 1/76

(54) **DISPOSITIF ET PROCÉDÉ DE DÉVEROUILLAGE D'UNE NACELLE DE TURBORÉACTEUR**
VORRICHTUNG UND VERFAHREN ZUR ENTRIEGELUNG EINER GONDEL EINES TURBOREAKTORS
THRUST REVERSER SYSTEM FOR A TURBOJET ENGINE

(30) Priorité: 14.04.2017 FR 1753283
(43) Date de publication de la demande: 17.10.2018
(73) Titulaire: SAFRAN AIRCRAFT ENGINES, 75015 Paris (FR)
(72) Inventeur: ALLUT, GABRIEL, 77550 MOISSY CRAMAYEL (FR)
(74) Mandataire: Delorme, Nicolas

(56) Documents cités:
- FR-A1- 2 890 644
- US-A1- 2010 264 676
- US-A1- 2014 270 935
- US-A1- 2017 016 412

## Description

La présente invention se rapporte à un système inverseur de poussée pour turboréacteur d'aéronef et à un procédé de déverrouillage d'un tel système inverseur de poussée.

Un avion comprend plusieurs turboréacteurs logés chacun dans une nacelle. Une nacelle présente généralement une structure tubulaire comprenant une entrée d'air en amont du turboréacteur, une section médiane destinée à entourer une soufflante du turboréacteur, une section aval intégrant éventuellement des moyens d'inversion de poussée et destinée à entourer la chambre de combustion du turboréacteur, et est généralement terminée par une tuyère d'éjection dont la sortie est située en aval du turboréacteur.

Les nacelles modernes sont destinées à abriter un turboréacteur double flux apte à engendrer d'une part un flux d'air chaud (également appelé flux primaire) issu de la chambre de combustion du turboréacteur, et d'autre part un flux d'air froid (flux secondaire) issu de la soufflante et circulant à l'extérieur du turboréacteur à travers un passage annulaire, également appelé veine, formé entre une structure interne définissant un carénage du turboréacteur et une paroi interne de la nacelle.

Les deux flux d'air sont éjectés du turboréacteur par l'arrière de la nacelle. Le rôle d'un inverseur de poussée est, lors de l'atterrissage d'un avion, d'améliorer la capacité de freinage de celui- ci en redirigeant vers l'avant au moins une partie de la poussée générée par le turboréacteur.

Dans cette phase, l'inverseur obstrue la veine du flux (primaire et / ou secondaire) et dirige ce dernier vers l'avant de la nacelle, générant de ce fait une contre-poussée qui vient s'ajouter au freinage des roues de l'avion et éventuellement des aérofreins sur les ailes.

Les moyens mis en œuvre pour réaliser cette réorientation du flux varient suivant le type d'inverseur. Cependant, dans tous les cas, la structure d'un inverseur comprend des capots mobiles déplaçables entre, d'une part, une position déployée dans laquelle ils permettent à la nacelle de dévier vers l'avant au moins le flux d'air secondaire, et d'autre part, une position escamotée dans laquelle ils participent à l'aérodynamique de la nacelle et l'inverseur ne génère pas de contre-poussée.

Ces capots peuvent remplir une fonction de déviation ou simplement d'activation d'autres moyens de déviation. Dans le cas d'un inverseur à grilles, également connu sous le nom d'inverseur à cascade, la réorientation du flux d'air est effectuée par des grilles de déviation, les capots n'ayant qu'une simple fonction de coulissage visant à découvrir ou recouvrir ces grilles.

Des portes de blocage complémentaires, également appelées volets, activées par le coulissement du capotage, permettent généralement une fermeture de la veine en aval des grilles de manière à optimiser la réorientation du flux froid.

Dans le cas d'un inverseur de poussée à portes, tel que décrit dans la demande EP0763654, deux portes pivotent autour de deux axes distincts entre une position escamotée et une position déployée. Lorsque les portes sont déployées, elles dévient à la fois le flux secondaire et le flux primaire globalement vers l'avant et à l'extérieur de la nacelle.

Lors d'opérations de maintenance sur un turboréacteur et la nacelle l'entourant, il est important de s'assurer que les capots mobiles ne peuvent pas s'ouvrir de manière inopinée, ce qui représenterait un danger pour les opérateurs.

De la même manière, lorsque les sécurités internes de l'inverseur sont endommagées, sécurités connues sous les termes de verrous primaires (PLS : Primary Lock System) et verrou tertiaire (TLS : Tertiary Lock System), il peut être préférable d'inhiber mécaniquement les capots mobiles plutôt que de risquer un déploiement en vol, ce qui serait catastrophique. L'inhibition des capots mobiles d'inverseur lors d'opérations de maintenance peut être obtenue par des systèmes d'inhibition électriques et/ou mécaniques. Une inhibition de l'inverseur en vol se fera plutôt mécaniquement.

Une telle inhibition mécanique s'effectue généralement par vissage des capots mobiles à une structure fixe de la nacelle, et/ou par des dispositifs de verrouillage tels que décrits dans la demande de brevet d'Aircelle FR2970521.

Les documents US 2010/0264676 A1 et US 2014/0270935 A1 décrivent également de tels dispositifs de verrouillage.

Ce dispositif de verrouillage comprend un unique verrou tertiaire disposé sur un mât réacteur destiné à verrouiller ce dernier sur un capot mobile. Ce verrou tertiaire comprend un crochet monté pivotant autour d'un axe, un loquet de blocage pour bloquer le crochet, des moyens de détection, tels qu'un détecteur magnétique ou optique, permettant de détecter la présence de la tête du loquet, une bielle pour détecter la fermeture correcte du capot et un actionneur pour faire passer le loquet de sa position de blocage vers sa position de déblocage.

Cependant, lorsque le crochet est en position verrouillée, il n'est pas possible de refermer l'inverseur sans risquer d'endommager la nacelle et l'inverseur lui-même, ce qui peut arriver en situation de maintenance.

De plus, ce dispositif de verrouillage nécessite plusieurs éléments dont une alimentation électrique, un actionneur électrique pour actionner le crochet et un détecteur, entre autre, entraînant un poids supplémentaire non négligeable.

Le dispositif est également complexe puisqu'il est nécessaire de prévoir des câblages électriques pour alimenter les actionneurs et les détecteurs.

L'invention vise à s'affranchir de ces inconvénients en proposant un système inverseur de poussée pour turboréacteur comprenant un système de verrouillage plus léger et plus robuste lors de la refermeture du capot mobile lorsque le système de verrouillage est verrouillé.

L'invention concerne un système inverseur de poussée selon l'objet de la revendication 1.

Selon un mode de réalisation possible, le premier élément de verrouillage comprend une première articulation présentant un axe de rotation B qui, dans la position de fermeture du capot mobile, est perpendiculaire à une direction X de déplacement du capot mobile entre la position de fermeture et la position de refermeture de ce dernier, permettant une rotation du premier élément de verrouillage entre une position de verrouillage et une position de déverrouillage par rapport au deuxième élément de verrouillage.

En variante, le premier élément de verrouillage comprend un ressort de rappel apte à exercer une force de rappel pour ramener le premier élément de verrouillage vers le deuxième élément de verrouillage.

Selon un premier mode de réalisation possible, les moyens de déviation de trajet comprennent une paroi inclinée formée sur le deuxième élément de verrouillage et inclinée par rapport à un axe longitudinal E. Une deuxième articulation est prévue sur le deuxième élément de verrouillage. La deuxième articulation présente un axe C perpendiculaire à l'axe de rotation B de rotation du premier élément de verrouillage, permettant la rotation du deuxième élément de verrouillage par rapport au premier élément de verrouillage entre une position de verrouillage dans laquelle les deux éléments de verrouillage sont sensiblement alignés selon la direction X et une position de déverrouillage dans laquelle le deuxième élément de verrouillage est incliné par rapport au premier élément de verrouillage. L'extrémité avant du premier élément de verrouillage est destinée à glisser le long de la paroi inclinée et à pousser cette dernière pour la faire pivoter de la position de verrouillage vers la position de déverrouillage.

En variante, les moyens de déviation de trajet comprennent un ressort de rappel tendant à maintenir le deuxième élément de verrouillage en position de verrouillage.

Selon un deuxième mode de réalisation possible, les moyens de déviation de trajet comprennent une paroi inclinée formée sur le deuxième élément de verrouillage. Le deuxième élément de verrouillage est fixé sur le capot fixe et le premier élément de verrouillage est monté sur le capot mobile et comprend la première articulation le rendant mobile en rotation par rapport à ce dernier autour de l'axe B, lorsque le capot mobile se déplace de la position de fermeture à la position de refermeture. L'extrémité avant du premier élément de verrouillage est destinée à glisser le long de la paroi inclinée entrainant une translation du premier organe d'accrochage du premier élément de verrouillage.

En variante, les moyens de déviation de trajet comprennent au moins une came montée pivotante sur un support solidaire de la structure fixe ou du capot mobile sur laquelle est monté le deuxième élément de verrouillage, et un organe de guidage prévu à l'extrémité avant du premier élément de verrouillage. L'organe de guidage est adapté pour que son déplacement lors de la phase de refermeture du capot mobile autorise la came à pivoter vers une position de repos. La came est adaptée pour que lors de la phase d'ouverture du capot mobile, l'organe de guidage coopère avec la came maintenue dans sa position de repos de façon à guider le premier organe d'accrochage selon le chemin différent.

En variante, les moyens de déviation comprennent un ressort de rappel permettant de solliciter en rotation la came vers sa position de repos.

Selon une autre variante, la came présente une face intérieure en regard du deuxième organe d'accrochage et une face extérieure dirigée à l'opposé du deuxième organe d'accrochage. L'organe de guidage est adapté pour se déplacer en appui contre la face intérieure lors de la phase de refermeture du capot mobile et en appui contre la face extérieure lors de la phase d'ouverture du capot mobile.

Avantageusement, l'axe D de la came est positionné au-dessus du deuxième organe d'accrochage du deuxième élément de verrouillage de façon à ce que la face intérieure de la came soit en contact avec l'organe de guidage du premier élément de verrouillage lorsque le capot mobile est en position de fermeture.

En variante, le système de verrouillage comprend un dispositif de sécurité pour empêcher la rotation de la came en cas de refermeture du capot mobile non commandée.

De préférence, le dispositif de sécurité comprend un vérin positionné à proximité de la came. Le vérin comprend une tige mobile entre une position déployée dans laquelle la tige est sortie du vérin pour venir en appui sur une face supérieure d'une deuxième portion de bloquer la came en cas de refermeture du capot mobile et une position rétractée dans laquelle la tige est rentrée dans le vérin pour libérer la deuxième portion de la came.

L'invention concerne également un procédé de déverrouillage d'un système inverseur de poussée pour un turboréacteur comportant au moins un capot mobile monté sur une nacelle du turboréacteur et déplaçable entre une position de fermeture dans laquelle le système d'inversion de poussée est inactivé et une position d'ouverture dans laquelle le système d'inversion de poussée est activé. Le système inverseur de poussée comprend en outre au moins un système de verrouillage, tel que défini précédemment. Le système de verrouillage est muni d'un premier élément de verrouillage et d'un deuxième élément de verrouillage montés respectivement sur le capot mobile et sur une structure fixe de la nacelle, aptes à être verrouillés et déverrouillés l'un par rapport à l'autre afin de verrouiller le capot mobile sur la structure fixe dans la position de fermeture du capot mobile.

Selon l'invention, un déplacement commandé du capot mobile à partir de sa position de fermeture jusqu'à une position de refermeture déclenche le déverrouillage des premier et deuxième éléments de verrouillage.

Selon un mode de réalisation possible, les premier et deuxième éléments de verrouillage comprennent respectivement un premier et un deuxième organes d'accrochage accrochés l'un à l'autre dans la position verrouillée des premier et deuxième éléments de verrouillage de façon à empêcher ces derniers d'être écartés l'un de l'autre selon une direction d'ouverture du capot mobile. Le trajet suivi par le premier organe d'accrochage par rapport au deuxième organe d'accrochage prend un chemin différent entre une phase de refermeture lorsque le capot mobile se déplace de sa position de fermeture vers sa position de refermeture et une phase d'ouverture lorsque le capot mobile se déplace de sa position de refermeture vers sa position d'ouverture.

En variante, lorsque le capot mobile est en position fermée, la rotation de la came est empêchée par un dispositif de sécurité en cas de refermeture du capot mobile non commandée.

L'invention fournit ainsi un système inverseur de poussée pour turboréacteur d'aéronef comprenant un système de verrouillage plus léger.

En effet, l'utilisation de systèmes de verrouillage de l'art antérieur nécessite la présence de trois actionneurs électriques, de détecteurs et de trois lignes de puissances qui traversent le fuselage et les ailes.

L'invention permet donc de s'affranchir de ces éléments lourds et de réaliser un gain de poids.

On obtient aussi une nacelle de conception plus simple présentant moins de câbles électriques et d'éléments.

L'invention fournit également un système de verrouillage plus robuste à la refermeture du capot mobile lorsque le système de verrouillage est verrouillé.

En effet, l'agencement des organes d'accrochage et leur forme permet d'éviter tout risque de collision destructrice entre les éléments du verrou à l'occasion d'une mauvaise manipulation de maintenance, par exemple, alors qu'avec un verrou classique, un risque de collision existe entre le pion de verrouillage fixé au capot mobile de l'inverseur et le crochet fixé au mât.

Le verrou tertiaire proposé ici peut être complètement autonome. Il permet alors de s'affranchir des alimentations électriques ou hydrauliques utilisées pour l'actionnement des verrous classiques: le verrouillage et le déverrouillage de la nacelle sont réalisés grâce aux mouvements respectivement de fermeture («stow») et de refermeture («over-stow») du capot mobile de la nacelle.

Le mouvement de refermeture du capot mobile est réalisé classiquement avant le déploiement du capot mobile, notamment pour permettre le déverrouillage ultérieur des organes d'accrochage.

Dans le cas de l'invention, le mouvement de refermeture du capot mobile s'accompagne simultanément du déverrouillage des organes d'accrochage.

Plus précisément, c'est le mouvement de refermeture du capot mobile qui actionne le déverrouillage des organes d'accrochage.

D'autres caractéristiques et avantages de l'invention ressortiront à la lecture de la description qui suit, donnée uniquement à titre d'exemple, en référence aux figures annexées, qui illustrent :
- figure 1, un schéma d'une nacelle comprenant un turboréacteur entouré de capots mobiles selon l'invention en position de fermeture ;
- figure 2, un schéma de cette nacelle avec les capots mobiles en position de refermeture ;
- figure 3, un schéma de cette nacelle avec les capots mobiles en position d'ouverture ;
- figure 4, un schéma détaillé des organes d'accrochage lorsqu'ils sont en position verrouillée ;
- figure 5, une vue de dessus schématique d'un système de verrouillage selon un premier mode de réalisation, lorsque le capot mobile est en position de fermeture ;
- figure 6, une vue de côté schématique de ce système de verrouillage en position de fermeture ;
- figure 7, une vue de dessus schématique de ce système de verrouillage lorsque le capot mobile est quasiment en position de refermeture ;
- figure 8, une vue de côté schématique de ce système de verrouillage dans cette position ;
- figure 9, une vue de dessus schématique de ce système de verrouillage lorsque le capot mobile est en position de refermeture ;
- figure 10, une vue de côté schématique de ce système de verrouillage dans cette position ;
- figure 11, une vue de dessus schématique de ce système de verrouillage lorsque le capot mobile est en position d'ouverture ;
- figure 12, une vue de côté schématique de ce système de verrouillage dans cette position ;
- figure 13, une vue de dessus schématique d'un système de verrouillage selon un autre mode de réalisation sur la base du premier mode de réalisation de la figure 5, lorsque le capot mobile est en position de fermeture ;
- figure 14, une vue de côté schématique de ce système de verrouillage dans cette position ;
- figure 15, une vue de dessus schématique d'un système de verrouillage selon une variante du premier mode de réalisation de la figure 5 incluant des capteurs de détection du verrouillage, lorsque le capot mobile est en position de fermeture ;
- figure 16, une vue de dessus schématique d'un système de verrouillage selon un autre mode de réalisation possible, lorsque le capot mobile est en position de fermeture ;
- figure 17, une vue de dessus schématique d'un système de verrouillage selon une variante simplifiée du mode de réalisation de la figure 16, lorsque le capot mobile est en position de fermeture ;
- figure 18, une vue de côté schématique du système de verrouillage de la figure 17 dans cette position de fermeture du capot mobile ;
- figure 19, une vue de dessus schématique de ce système de verrouillage lorsque le capot mobile commence à translater vers une position de refermeture ;
- figure 20, une vue de côté schématique de ce système de verrouillage dans cette position ;
- figure 21, une vue de côté schématique de ce système de verrouillage lorsque le capot mobile est en position de refermeture ;
- figure 22, une vue de côté schématique de ce système de verrouillage lorsque le capot mobile commence à revenir en position d'ouverture ;
- figure 23, une vue de dessus schématique de ce système de verrouillage dans cette position ;
- figure 24, une vue de dessus schématique d'un système de verrouillage comprenant un vérin en position de blocage d'une came selon un autre mode de réalisation lorsque le capot mobile est en position de fermeture ;
- figure 25, une vue de côté schématique de ce système de verrouillage dans cette position ;
- figure 26, une vue schématique d'un système inverseur de poussée à portes ;
- figure 27, une vue de dessus schématique du système de verrouillage de ce système inverseur de poussée à portes ;
- figure 28, une vue de profil de ce système de verrouillage.

Dans toute la description qui va suivre, par convention, on appelle la direction longitudinale X, la direction qui est parallèle à l'axe longitudinal A de la nacelle 1 et à l'axe longitudinal E du système de verrouillage 8.

D'autre part, les termes avant (ou amont) et arrière (ou aval) sont à considérer par rapport à une direction d'avancement de l'aéronef rencontrée suite à la poussée exercée par le turboréacteur 2.

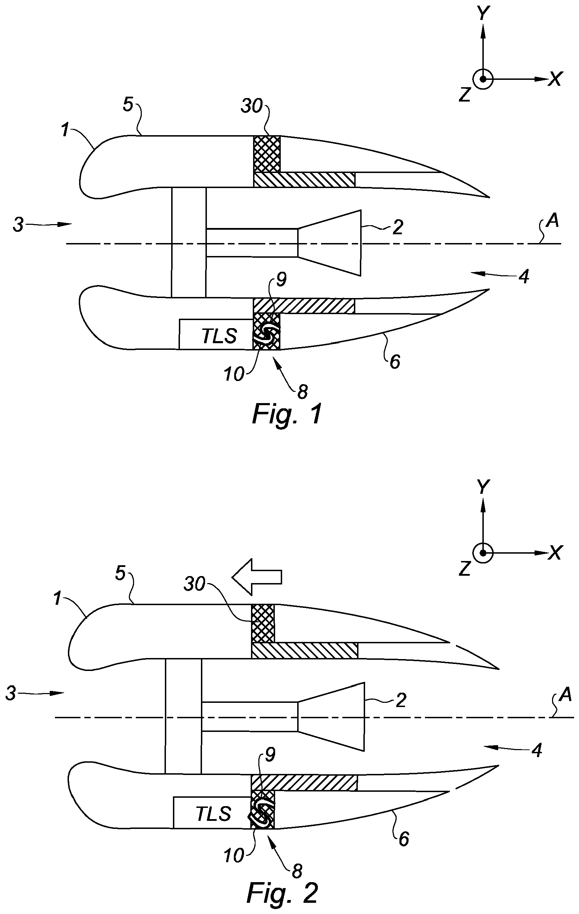

La figure 1 représente un schéma d'une nacelle 1 comprenant un turboréacteur 2 entouré de capots mobiles 6 selon l'invention, en position de fermeture (ou escamotée). Dans cette position, le turboréacteur 2 peut fonctionner en poussée avant.

La nacelle 1 comprend une section amont 3 d'entrée d'air comportant une structure fixe 5 entourant une soufflante de turboréacteur et une section aval 4 comportant au moins un système d'inversion de poussée. Dans cet exemple, la structure fixe 5 est un capot fixe 5. Le système d'inversion de poussée comprend des moyens de déviation d'au moins une partie d'un flux d'air du turboréacteur 2.

La section aval 4 comporte au moins un capot mobile 6 en translation selon la direction X qui est sensiblement parallèle à l'axe longitudinal A de la nacelle 1.

Un joint 30 souple en élastomère est disposé entre le capot mobile 6 et le capot fixe 5. En position de fermeture, le joint 30 assure l'étanchéité entre le capot fixe 5 et le capot mobile 6.

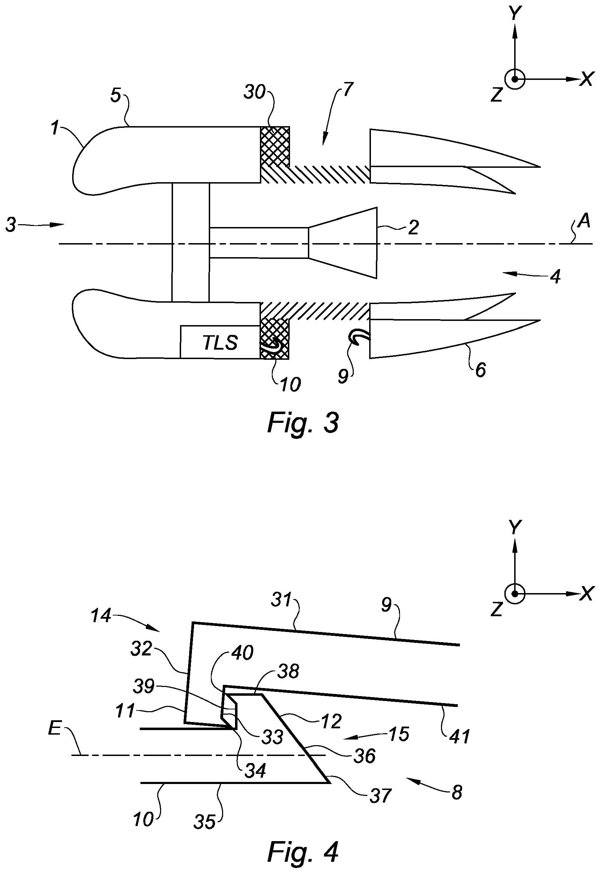

Le capot mobile 6 est mobile entre une position de fermeture (ou escamotée) dans laquelle il assure la continuité aérodynamique de la nacelle 1 et couvre les moyens de déviation, comme illustré sur la figure 1, et une position d'ouverture (ou déployée) dans laquelle il ouvre un passage 7 dans la nacelle 1 et découvre les moyens de déviation, comme illustré sur la figure 3.

La nacelle 1 comprend au moins un système de verrouillage 8 du capot mobile 6 sur le capot fixe 5 comportant un premier élément de verrouillage 9 et un deuxième élément de verrouillage 10.

L'un des éléments de verrouillage 10 est monté sur le capot fixe 5 et l'autre élément de verrouillage 9 est monté sur le capot mobile 6.

Chacun des éléments de verrouillage 9, 10 comprend une extrémité avant 14, 15 respective munie chacune d'un organe d'accrochage 11, 12, dont un premier organe d'accrochage 11 et un deuxième organe d'accrochage 12. Au moins un organe d'accrochage 11, 12 peut être formé par un crochet. Dans le cas où un seul des deux organes d'accrochages 11, 12 est formé par un crochet, l'autre organe d'accrochage peut être formé par un barreau par exemple cylindrique.

Dans l'exemple des figures 1 à 24, le premier élément de verrouillage 9 est monté sur le capot mobile 6 et le deuxième élément de verrouillage 10 est monté sur le capot fixe 5.

En variante (non représentée), le premier élément de verrouillage 9 peut être monté sur le capot fixe 5 et le deuxième élément de verrouillage 10 monté sur le capot mobile 6.

Cette variante est applicable à tous les modes de réalisation qui vont suivre.

Le capot mobile 6 est mobile entre la position de fermeture dans laquelle les organes d'accrochage 11, 12 des deux éléments de verrouillage 9, 10 sont accrochés l'un à l'autre ou enclenchés (figure 1), une position de refermeture du capot mobile 6 dans laquelle les deux organes d'accrochage 11, 12 sont décrochés automatiquement l'un de l'autre (figure 2) et la position d'ouverture dans laquelle les deux éléments de verrouillage 9, 10 sont distants (figure 3).

La position de refermeture du capot mobile 6 est atteinte après un mouvement de translation du capot mobile 6 vers le capot fixe 5, c'est à dire vers l'avant (ou l'amont) de la nacelle 1, entraînant un déplacement d'un des éléments de verrouillage 9, 10 vers l'autre élément de verrouillage 9, 10 selon la direction X.

Ce mouvement de translation du capot mobile 6 vers le capot fixe 5 à partir de la position de fermeture, est communément appelé mouvement d' « over-stow » qui est un mouvement de refermeture du capot mobile 6 lorsque ce dernier est déjà fermé. De manière générale, que l'inverseur de poussée soit de type à grilles ou à portes, le mouvement de refermeture d'un capot mobile en translation ou en rotation est réalisé avant le déploiement en ouverture du capot mobile. Ce mouvement correspond à un déplacement additionnel du capot mobile, sur une course relativement faible, vers une structure fixe (par exemple un capot fixe) à partir de la position de fermeture du capot mobile.

Dans l'état de la technique, le mouvement de refermeture a pour fonction de supprimer les efforts en tension qui s'exercent mutuellement entre les deux éléments de verrouillage pour permettre le déverrouillage de ces éléments, et en particulier le déverrouillage des organes d'accrochage que comportent ces éléments, par des actionneurs commandés de façon électrique ou hydraulique.

Dans le cas de l'invention, c'est le mouvement de refermeture du capot mobile 6 qui actionne de manière automatique le déverrouillage des deux éléments de verrouillage 9, 10.

En position de refermeture, le joint 30 est comprimé de quelques millimètres (2 mm par exemple).

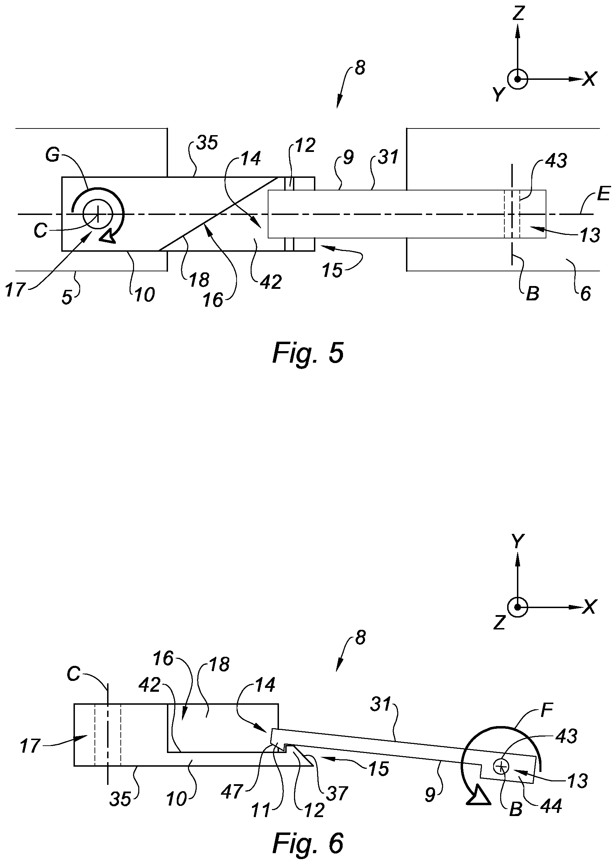

Le mouvement de refermeture du capot mobile 6 s'accompagne d'un déplacement d'un des éléments de verrouillage 9, 10 par rapport à l'autre élément de verrouillage 9, 10 selon un trajet relatif prédéterminé. Dans le premier mode de réalisation décrit en référence aux figures 5 à 12, le deuxième élément de verrouillage 10 comprend des moyens de déviation de trajet 16 adaptés pour que le trajet suivi par le premier organe d'accrochage 11 par rapport au deuxième organe d'accrochage 12 prenne un chemin différent entre une phase de refermeture lorsque le capot mobile 6 se déplace de sa position de fermeture vers sa position de refermeture et une phase d'ouverture lorsque le capot mobile 6 se déplace de sa position de refermeture vers sa position d'ouverture.

Autrement dit, le trajet d'ouverture du premier organe d'accrochage 11 par rapport au deuxième organe d'accrochage 12 s'effectue selon un chemin différent de celui effectué par le trajet de refermeture du premier organe d'accrochage 11, réalisant ce qui peut être appelé un trajet à cycle d'hystérésis, afin de permettre aux éléments de verrouillage 9, 10 de rester déverrouillés suite au déverrouillage automatique déclenché par la refermeture du capot mobile 6.

La position d'ouverture est obtenue depuis la position de refermeture et après un mouvement de translation du capot mobile 6 vers une direction opposée au capot fixe 5 selon la direction X, c'est à dire vers l'arrière ou aval de la nacelle 1.

Comme illustré dans l'exemple de la figure 4, le premier organe d'accrochage 11 du premier élément de verrouillage 9 est positionné à sa partie avant 14. Il présente une forme sensiblement parallèlipipédique.

Le premier élément de verrouillage 9 comprend une partie longitudinale 31 prolongée par une partie avant 32 formant un angle droit par rapport à cette partie longitudinale 31. En position de fermeture, la partie avant 32 s'étend en direction du deuxième élément de verrouillage 10.

Le premier organe d'accrochage 11 est formé par cette partie avant 32 qui comprend une protubérance 34 faisant saillie à l'extrémité d'une paroi interne 33.

Le deuxième élément de verrouillage 10 comprend une partie longitudinale 35 terminée par une partie biseauté 36 à l'extrémité avant 15 du deuxième élément de verrouillage 10.

La partie biseauté 36 comprend une paroi avant inclinée 37, inclinée par rapport à la direction générale de la partie longitudinale 35 (axe longitudinal E) et vers cette dernière.

La paroi avant inclinée 37 de la partie biseauté 36 est prolongée par une paroi d'extrémité 38 parralèlle à la direction générale de la partie longitudinale 35.

La paroi d'extrémité 38 est prolongée par une paroi interne 39 perpendiculaire à cette dernière.

La paroi interne 39 comprend une protubérance 40 à son extrémité faisant saillie sur celle-ci, vers la partie longitudinale 35.

Lorsque le capot mobile 6 est en position fermée, les deux organes d'accrochage 11, 12 sont verrouillés l'un à l'autre, comme illustrés sur la figure 4.

La partie avant 32 du premier élément de verrouillage 9 est en contact avec la partie biseauté 36 du deuxième élément de verrouillage 10.

La protubérance 34 de la partie avant 32 du premier élément de verrouillage 9 est bloquée par la protubérance 40 de la partie biseauté 36 du deuxième élément de verrouillage 10. Le mouvement des organes d'accrochage 11, 12 est empêché dans la direction Y.

Ces deux protubérances 34, 40 empêchent le déverrouillage des éléments de verrouillage 9, 10.

Comme représenté sur les figures 4 et 6, la partie longitudinale 31 du premier élément de verrouillage 9 est inclinée par rapport à la partie longitudinale 35 du deuxième élément de verrouillage 10.

Lors du mouvement de refermeture du capot mobile 6, le premier élément de verrouillage 9 se déplace vers le deuxième élément de verrouillage 10, éloignant les deux organes d'accrochage 11, 12 l'un de l'autre pour déverrouiller ou libérer les deux éléments de verrouillage 9, 10 l'un de l'autre. Le premier élément de verrouillage 9 chevauche davantage le deuxième élément de verrouillage 10.

Lors de ce mouvement, une paroi interne 41 du premier élément de verrouillage 9 glisse sur la paroi d'extrémité 38 de la partie biseauté 36 du deuxième élément de verrouillage 10 grâce à l'inclinaison du premier élément de verrouillage 9 par rapport au deuxième élément de verrouillage 10.

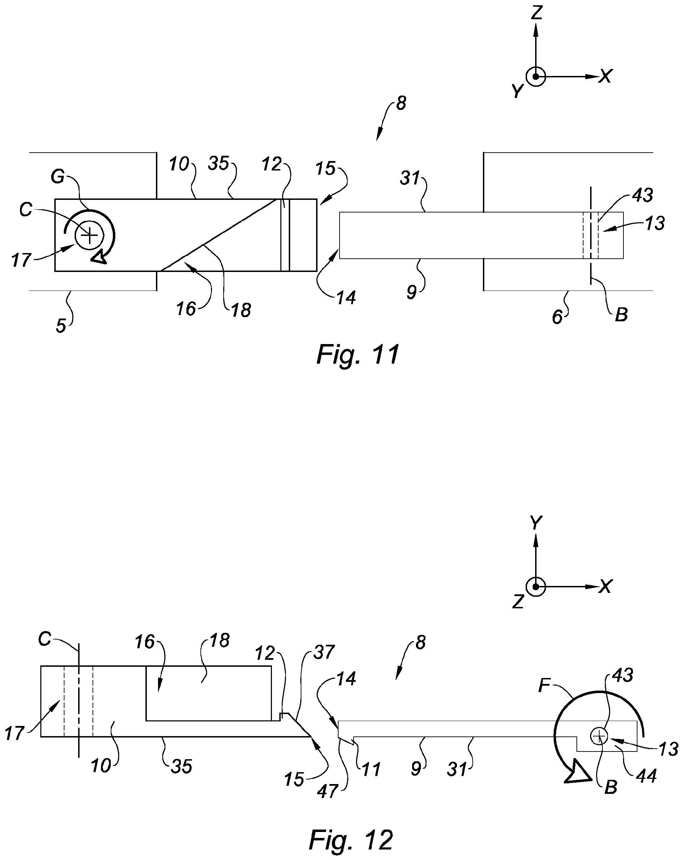

Lorsque le capot mobile 6 est en position d'ouverture, les deux éléments de verrouillage 9, 10 sont déverrouillés et distants, comme représentés sur les figures 11 et 12.

Lorsque le capot mobile 6 passe de la position d'ouverture à la position de fermeture, le premier élément de verrouillage 9 se rapproche progressivement du deuxième élément de verrouillage 10.

Lorsque ces derniers rentrent en contact, le premier organe d'accrochage 11 ou plus précisemment la partie avant 32 du premier élément de verrouillage 9 glisse le long du deuxième organe d'accrochage 12 ou plus précisemment le long de la paroi avant inclinée 37 du deuxième élément de verrouillage 10, puis le long la paroi d'extrémité 38 de la partie biseauté 36 du deuxième élément de verrouillage 10, jusqu'à ce que la paroi interne 33 du premier élément de verrouillage 9 soit en regard de la paroi interne 39 du deuxième élément de verrouillage 10, comme illustré sur la figure 4.

D'autres formes d'organes d'accrochage sont également possibles tout en permettant ce mode de fonctionnement.

Les figures 5 à 12 illustrent un système de verrouillage 8 selon un premier mode de réalisation possible.

En position de fermeture (figures 5 et 6), les éléments de verrouillage 9, 10 s'étendent sensiblement selon la direction X.

Le premier élément de verrouillage 9 comprend une première articulation 13 montée sur le capot mobile 6 et présentant un axe de rotation B perpendiculaire à la direction X, permettant ainsi la rotation du premier élément de verrouillage 9 par rapport au capot mobile 6 dans un plan de rotation (X, Y) perpendiculaire au plan de la figure, entre une position de verrouillage dans laquelle les deux organes d'accrochage 11, 12 sont accrochés ensemble et une position de déverrouillage dans laquelle les deux organes d'accrochage 11, 12 sont libérés l'un de l'autre.

En alternative, tout en étant perpendiculaire à la direction X, l'axe de rotation B du premier élément de verrouillage 9 pourrait former un angle par rapport au plan de la figure qui est un plan sensiblement tangent à la surface du capot mobile 6. Le plan de rotation du premier organe d'accrochage 11 ne serait alors plus perpendiculaire au plan de la figure. Il n'est pas exclu de prévoir l'axe de rotation B perpendiculaire au plan de la figure, c'est-à-dire s'étendant selon une direction radiale de la nacelle, bien que cette disposition puisse présenter dans la direction radiale un encombrement supérieur à celui du premier mode de réalisation présentement décrit.

Le premier élément de verrouillage 9 comprend une partie d'extrémité arrière 44 comportant un orifice 43 traversé par l'axe B. La partie d'extrémité arrière 44 présente une épaisseur plus élevée que le reste du premier élément de verrouillage 9.

La figure 5 illustre une vue de dessus et la figure 6 une vue de côté des deux éléments de verrouillage 9, 10 en position verrouillés lorsque le capot mobile 6 est en position de fermeture.

Les extrémités avant 14, 15 des éléments de verrouillage 9, 10 se chevauchent.

Le premier élément de verrouillage 9 comprend un ressort de rappel (non représenté) apte à exercer une force de rappel pour ramener le premier élément de verrouillage 9 vers le deuxième élément de verrouillage 10.

La flèche F présente l'action du ressort de rappel sur le premier élément de verrouillage 9.

Comme détaillé ci-dessus, les deux organes d'accrochage 11, 12 sont en contact et se bloquent mutuellement de façon à ne pas pouvoir se décrocher, même s'il y a de fortes vibrations.

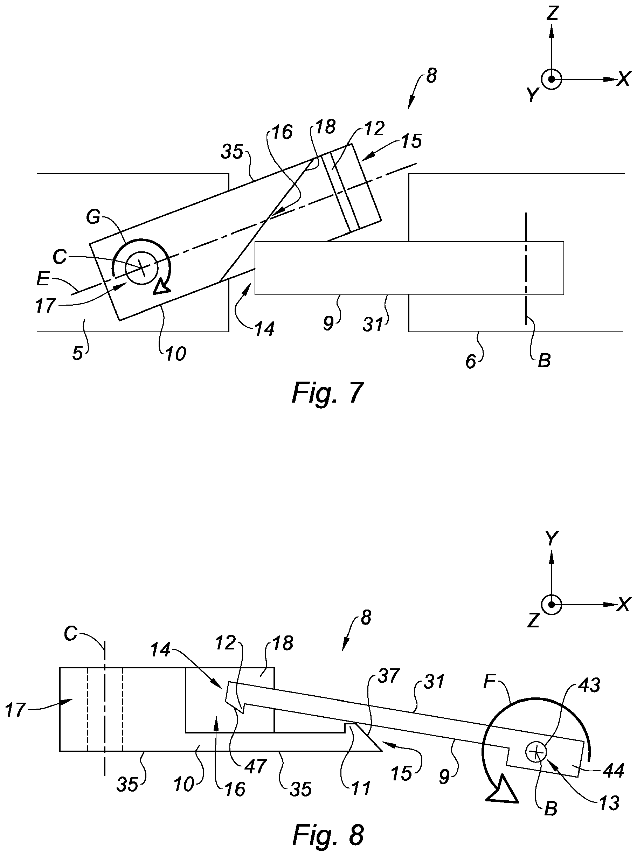

La figure 7 illustre une vue de dessus et la figure 8 une vue de côté des deux éléments de verrouillage 9, 10 lors du mouvement de refermeture du capot mobile 6.

Comme représenté sur la figure 8, au fur et à mesure que le capot mobile 6 se rapproche du capot fixe 5, le premier élément de verrouillage 9 glisse le long du premier organe d'accrochage 11 du deuxième élément de verrouillage 10, comme décrit précédemment, entrainant le pivotement du premier élément de verrouillage 9 autour de l'axe B qui est parallèle à l'axe Z, dans cet exemple, et dans le sens opposé à celui du deuxième élément de verrouillage 10 (sens horaire sur la figure 8).

Les deux organes d'accrochage 11, 12 s'éloignent l'un de l'autre selon la direction X et la direction Y.

Le système de verrouillage 8 comprend des moyens de déviation 16 permettant de dévier le trajet du premier organe d'accrochage 11 du premier élément de verrouillage 9 par rapport au deuxième organe d'accrochage 12 du deuxième élément de verrouillage 10 lorsque le capot mobile 6 translate de sa position de fermeture vers sa position de refermeture, comme illustré sur la figure 7.

Selon le premier mode de réalisation, les moyens de déviation de trajet 16 comprennent une paroi inclinée 18 par rapport à un axe longitudinal E du deuxième élément de verrouillage 10.

La paroi inclinée 18 est formée sur le deuxième élément de verrouillage 10. Elle est perpendiculaire à une surface plane 42 du deuxième élément de verrouillage 10.

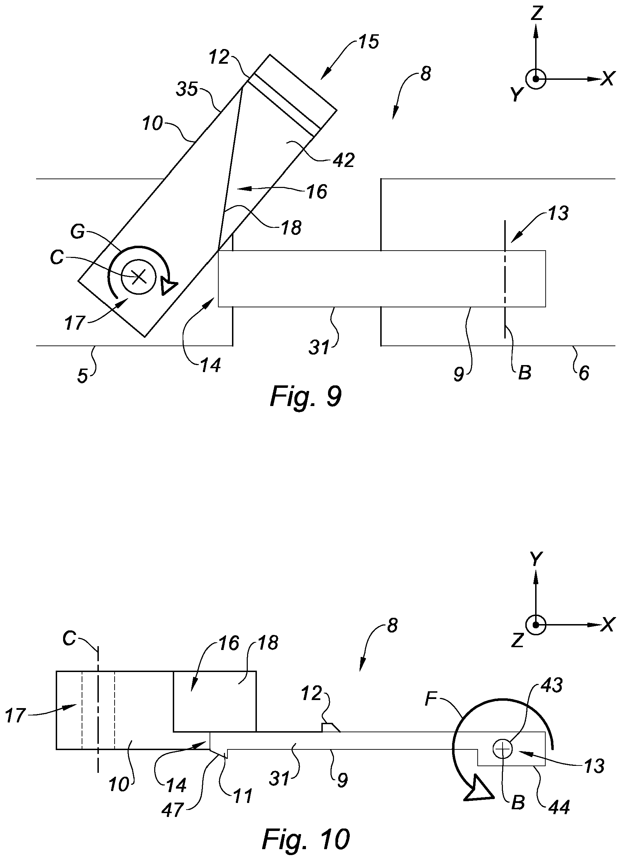

Une articulation 17 est prévue sur le deuxième élément de verrouillage 10. La deuxième articulation 17 présente un axe C perpendiculaire à l'axe B permettant la rotation du deuxième élément de verrouillage 10 par rapport au premier élément de verrouillage 9 dans le plan (X, Z) entre une position de verrouillage dans laquelle les deux éléments de verrouillage 9, 10 sont sensiblement alignés selon la direction X (figures 5 et 6) et une position de déverrouillage dans laquelle le deuxième élément de verrouillage 10 est incliné par rapport au premier élément de verrouillage 9 (figures 9 et 10).

L'extrémité avant 14 du premier élément de verrouillage 9 est destinée à glisser le long de la paroi inclinée 18 tout en la poussant pour la faire pivoter de la position de verrouillage vers la position de déverrouillage.

La partie de l'extrémité avant 14 qui glisse le long de la paroi inclinée 18 est schématiquement représentée par un coin, mais il est entendu que pour limiter les frottements et l'usure de cette partie d'extrémité, il peut être prévu une partie arrondie ou encore munie d'un galet ou d'un roulement à billes destinés à rouler sur la paroi inclinée 18.

Les moyens de déviation de trajet 16 comprennent un ressort de rappel (non représenté) tendant à maintenir le deuxième élément de verrouillage 10 en position de verrouillage, c'est-à-dire aligné selon la direction X.

La flèche G représente l'action du ressort de rappel sur le deuxième élément de verrouillage 10.

Comme représenté sur les figures 7 et 8, lors du mouvement de refermeture du capot mobile 6, au fur et à mesure que le capot mobile 6 se rapproche du capot fixe 5, le premier élément de verrouillage 9 glisse le long du premier organe d'accrochage 11 du deuxième élément de verrouillage 10, et simultanément l'extrémité avant 14 du premier élément de verrouillage 9 glisse le long de la paroi inclinée 18 du deuxième élément de verrouillage 10 en la poussant.

Ce mouvement entraine la rotation du deuxième élément de verrouillage 10 par rapport au premier élément de verrouillage 9 dans le plan (Z, X) (sens antihoraire sur la figure 7), autour de l'axe C.

Le ressort de rappel des moyens de déviation de trajet 16 présente une raideur adaptée pour ne pas gêner le mouvement de refermeture du capot mobile 6, c'est-à-dire pour ne pas empêcher le pivotement du deuxième élément de verrouillage 10 lors de ce mouvement de refermeture lorsque le premier élément de verrouillage 9 exerce un appui sur la paroi inclinée 18 en glissant le long de celle-ci.

Comme représenté sur les figures 9 et 10, lorsque le mouvement de refermeture est terminé, le premier élément de verrouillage 9 et le deuxième élément de verrouillage 10 sont décalés l'un par rapport à l'autre dans le plan (X, Z).

Les extrémités avant 14, 15 des éléments de verrouillage 9, 10 ne sont plus superposées. Le premier élément de verrouillage 9 a pivoté autour de l'axe B (sens antihoraire sur la figure 10) pour se retrouver quasiment dans le même plan (X, Z) que celui du deuxième élément de verrouillage 10.

Les éléments de verrouillage 9, 10 peuvent ensuite être éloignés l'un de l'autre par un mouvement de translation du capot mobile 6 vers une direction opposée au capot fixe 5 (vers l'arrière).

Les figures 11 et 12 représentent les éléments de verrouillage 9, 10 distants lorsque le capot mobile 6 est en position d'ouverture.

Grâce au ressort de rappel, le deuxième élément de verrouillage 10 pivote autour de l'axe C vers le premier élément de verrouillage 9 pour retrouver sa position initiale, c'est-à-dire parallèle à la direction X.

Les éléments de verrouillage 9, 10 sont sensiblement alignés l'un par rapport à l'autre selon la direction X.

L'inverseur de poussée du turboréacteur 2 peut ainsi être activé.

Pour retourner à la position de fermeture du capot mobile 6, ce dernier se rapproche du capot fixe 5. Lorsque les deux organes d'accrochage 11, 12 rentrent en contact, ils s'enclenchent l'un dans l'autre automatiquement, comme représenté sur les figures 5 et 6.

En variante (non représentée), le premier élément de verrouillage 9 peut être monté sur le capot fixe 5 et le deuxième élément de verrouillage 10 peut être monté sur le capot mobile 6.

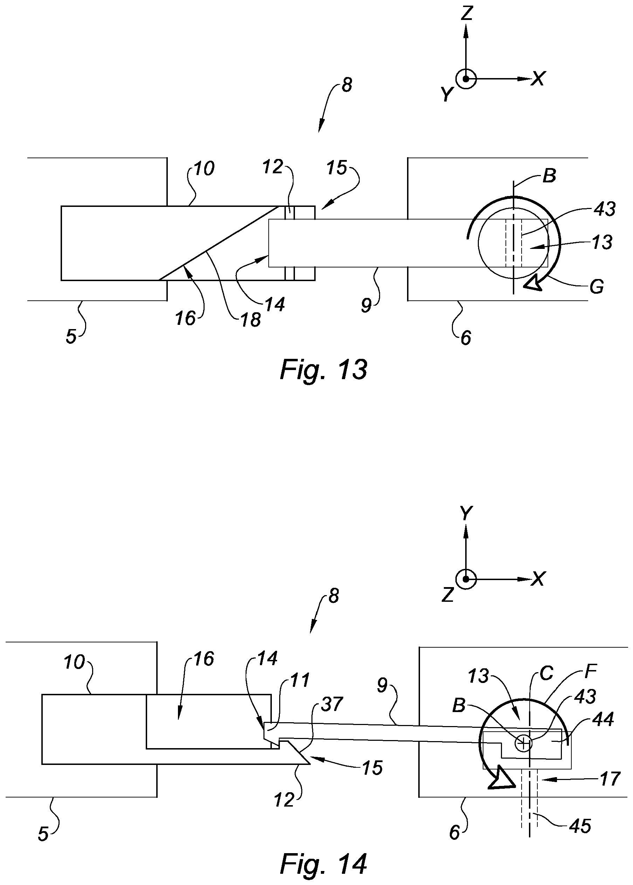

La figure 13 représente une vue de dessus d'un système de verrouillage 8 selon un autre mode de réalisation lorsque le capot mobile 6 est en position de fermeture. La figure 14 représente ce système de verrouillage 8 vue de profil.

Selon ce mode de réalisation, le premier élément de verrouillage 9 comprend la première articulation 13 et la deuxième articulation 17.

Le premier élément de verrouillage 9 est relié au capot mobile 6 par l'intermédiaire de la deuxième articulation 17.

La deuxième articulation 17 est associée à un ressort de rappel pour ramener le premier élément de verrouillage 9 aligné avec le deuxième élément de verrouillage 10.

Le deuxième élément de verrouillage 10 est fixé au capot fixe 5 et est immobile par rapport à ce capot fixe 5. L'axe B est perpendiculaire à l'axe C.

Le deuxième élément de verrouillage 10 comprend la paroi inclinée 18 telle que décrite précédemment.

Le premier élément de verrouillage 9 comprend une partie d'extrémité arrière 44 comportant un orifice 43 traversé par l'axe B.

La partie d'extrémité arrière 44 comporte également un deuxième orifice (non représenté).

Le capot mobile 6 comprend un orifice 45. L'axe C de la deuxième articulation 17 traverse l'orifice 45 du capot mobile 6 et le deuxième orifice de la partie d'extrémité arrière 44 du premier élément de verrouillage 9.

Le premier élément de verrouillage 9 est ainsi mobile selon deux degrés de liberté par rapport au deuxième élément de verrouillage 10 qui est fixe.

Le fonctionnement de ce système de verrouillage 8 est similaire à celui décrit précédemment.

La différence réside dans le fait que c'est le premier élément de verrouillage 9 qui pivote autour de l'axe C dans le plan (X, Z) (sens antihoraire sur la figure 13) lors du mouvement de refermeture du capot mobile 6.

Le trajet suivi par le premier organe d'accrochage 11 pivotant relativement au deuxième organe d'accrochage 12 est le même que dans le mode de réalisation précédent.

De même que dans le mode de réalisation précédent, l'ensemble formé par les deux organes d'accrochage 11, 12 présente deux degrés de liberté relativement aux capots 5, 6.

Dans ces deux modes de réalisation, le premier organe d'accrochage 11 pivotant effectue un trajet de refermeture, de la position de fermeture vers la position de refermeture du capot mobile 6, qui est différent du trajet d'ouverture qu'il suit de la position de refermeture à la position d'ouverture du capot mobile 6. Autrement dit, le trajet d'ouverture ne s'effectue pas selon un chemin en sens inverse de celui suivi par le trajet de refermeture.

Alternativement, le deuxième élément de verrouillage 10 peut comprendre la première articulation 13 et la deuxième articulation 17. Le deuxième élément de verrouillage 10 est alors relié au capot fixe 5 par l'intermédiaire de la deuxième articulation 17.

Alternativement, pour ces deux variantes, le premier élément de verrouillage 9 peut être monté sur le capot fixe 5 et le deuxième élément de verrouillage 10 monté sur le capot mobile 6.

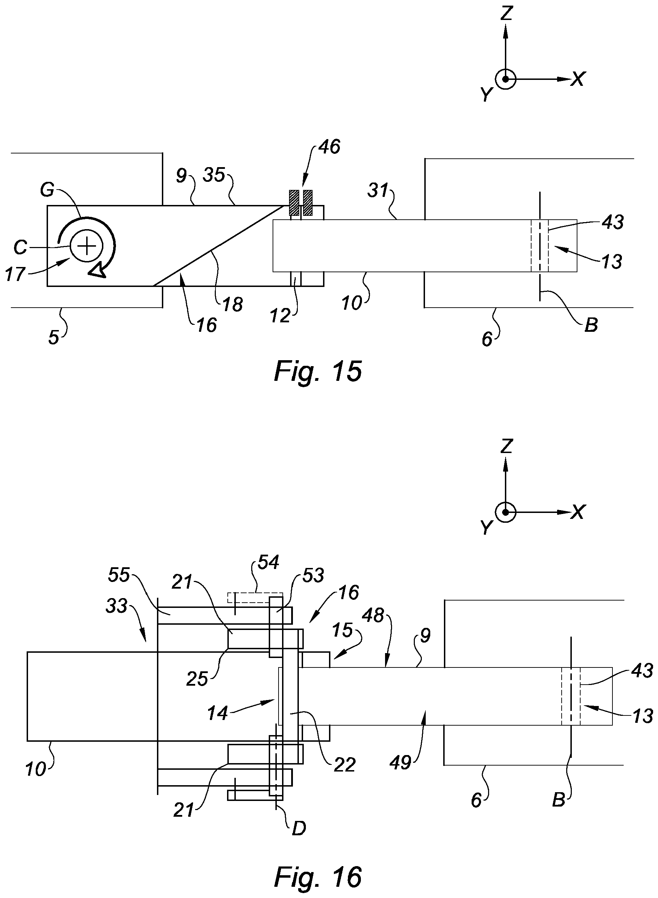

Selon un autre mode de réalisation représenté sur la figure 15, le système de verrouillage 8 peut comprendre un ensemble de capteurs 46 formé de deux capteurs de proximité inductifs installés au voisinage de la partie longitudinale 31 du premier élément de verrouillage 9, avec par exemple un capteur monté sur le premier élément de verrouillage 9 et un autre capteur monté sur le deuxième élément de verrouillage 10, de sorte à détecter le verrouillage du premier organe d'accrochage 11 du premier élément de verrouillage 9 (capot mobile 5 en position de fermeture) par la position correspondante des deux capteurs qui se trouvent alors très proches l'un de l'autre.

Le système de verrouillage 8 comprend un moyen de blocage (non représenté) permettant de bloquer les éléments de verrouillage 9, 10 en position verrouillée lorsque l'ensemble de capteurs 46 a détecté le verrouillage du premier organe d'accrochage 11 du premier élément de verrouillage 9.

Les figures 16 à 25 illustrent un autre mode de réalisation, dans lequel les moyens de déviation de trajet 16 comprennent en particulier une came pivotante.

Le deuxième élément de verrouillage 10 est fixé sur le capot fixe 5. Le premier élément de verrouillage 9 est monté sur le capot mobile 6 et comprend la première articulation 13 le rendant mobile en rotation par rapport à ce dernier autour de l'axe B.

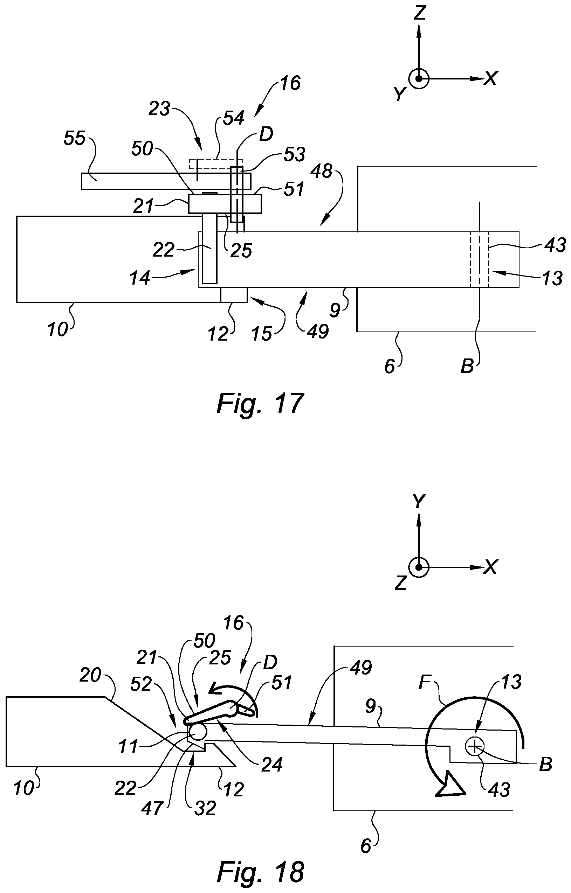

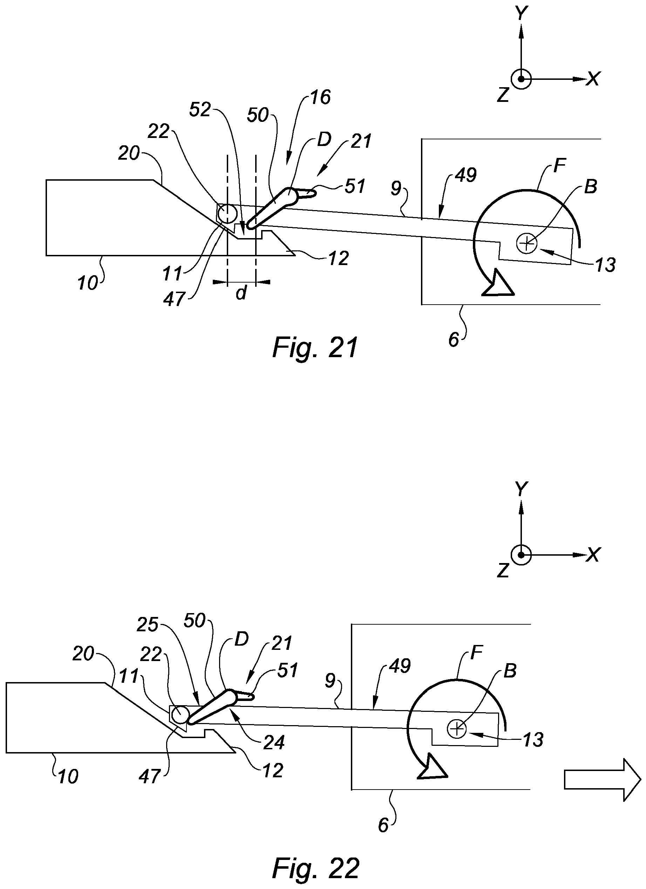

Le mouvement du capot mobile 6 de la position de fermeture (figures 17 et 18) à la position de refermeture (figure 21) entraine une translation du premier organe d'accrochage 11 du premier élément de verrouillage 9 vers le deuxième élément de verrouillage 10.

L'extrémité avant 14 du premier élément de verrouillage 9 glisse le long d'une paroi inclinée 20 formée sur le deuxième élément de verrouillage 10. Autrement dit, le premier organe d'accrochage 11 remonte la paroi inclinée 20.

La partie avant 32 du premier organe d'accrochage 11 du premier élément de verrouillage 9 comprend une paroi inclinée 47 pouvant être prévue très légèrement concave et sensiblement parallèle à la paroi inclinée 20 du deuxième élément de verrouillage 10 pour avoir un appui non anguleux du premier organe d'accrochage 11 sur la paroi inclinée 20 et limiter ainsi l'usure mutuelle de ces pièces lors du mouvement de refermeture du capot mobile 6.

Le premier élément de verrouillage 9 est similaire à celui du mode de réalisation précédent. Il comprend de même une première articulation 13 montée sur le capot mobile 6 et présentant un axe de rotation B perpendiculaire à la direction X, et comprend également un ressort de rappel le ramenant en position de verrouillage.

En alternative, tout en étant perpendiculaire à la direction X, l'axe de rotation B du premier élément de verrouillage 9 pourrait former un angle par rapport au plan de la figure qui est un plan sensiblement tangent à la surface du capot mobile 6.

Les moyens de déviation de trajet 16 comprennent au moins une came 21 montée pivotante sur un support 55 solidaire d'une structure, ici le capot fixe 5, sur laquelle le deuxième élément de verrouillage 10 est monté solidairement. Ce support 55 s'étend par exemple le long d'une face latérale 23 du deuxième élément de verrouillage 10, comme représenté sur la figure 16.

Les moyens de déviation de trajet 16 comprennent en outre un organe de guidage 22, par exemple formé par une tige cylindrique ou un pion, prévu à l'extrémité avant 14 du premier élément de verrouillage 9. Cet organe de guidage 22 peut être prévu monté rotatif sur son axe par rapport au corps du premier élément de verrouillage 9. Par exemple, une tige cylindrique rotative 22 peut être montée sur des roulements (non représentés) installés sur l'extrémité avant 14. Dans ce qui suit, on parlera de tige de guidage 22 pour désigner cet organe de guidage. La tige de guidage 22 fait saillie par rapport à au moins l'un des côtés latéraux 48 du premier élément de verrouillage 9.

La came 21 est mobile en rotation autour d'un axe pivot 53 qui s'étend selon une direction D par exemple parallèle à celle de l'axe B autour duquel pivote le premier élément de verrouillage 9. Un axe pivot 53 formant avec l'axe B un angle, par exemple de 90°, reste envisageable, auquel cas la position et le profil de la came devront être adaptés pour permettre au premier organe d'accrochage 11 d'effectuer le trajet à cycle d'hystérésis mentionné précédemment.

Les moyens de déviation de trajet 16 comprennent un ressort de rappel permettant de maintenir la came 21 en position de repos.

La tige de guidage 22 est positionnée sur la face supérieure 49 du premier élément de verrouillage 9.

La figure 16 illustre un mode de réalisation dans lequel les moyens de déviation de trajet 16 comprennent deux cames 21, et les figures 17 à 23 illustrent un mode de réalisation dans lequel les moyens de déviation de trajet 16 comprennent une seule came 21.

La présence de deux cames 21 implique que la tige de guidage 22 fait saillie des deux côtés latéraux 48 du premier élément de verrouillage 9. Cette redondance apporte une sécurité supplémentaire dans le cas très hypothétique de rupture de l'une des deux cames. La sécurité peut néanmoins être jugée satisfaisante avec une seule came 21.

Avec une seule came 21 ou deux cames, le mécanisme pour assurer la position de repos en butée de chaque came 21 peut comprendre un bras 54 solidaire de l'axe pivot 53 de la came, qui vient en butée contre un pion fixé au capot fixe 5. Sur les figures 16 et 17, un tel pion est monté sur chaque support 55 solidaire du capot fixe 5, et est schématisé par un trait.

Par souci de simplification, la cinématique du dispositif sera décrite pour le mode de réalisation à une seule came (figures 17 à 23).

La came 21 comprend une première portion 50 et une deuxième portion 51 inclinée par rapport à la première portion 50. Ces deux portions 50, 51 sont formées de part et d'autre de l'axe pivot 53.

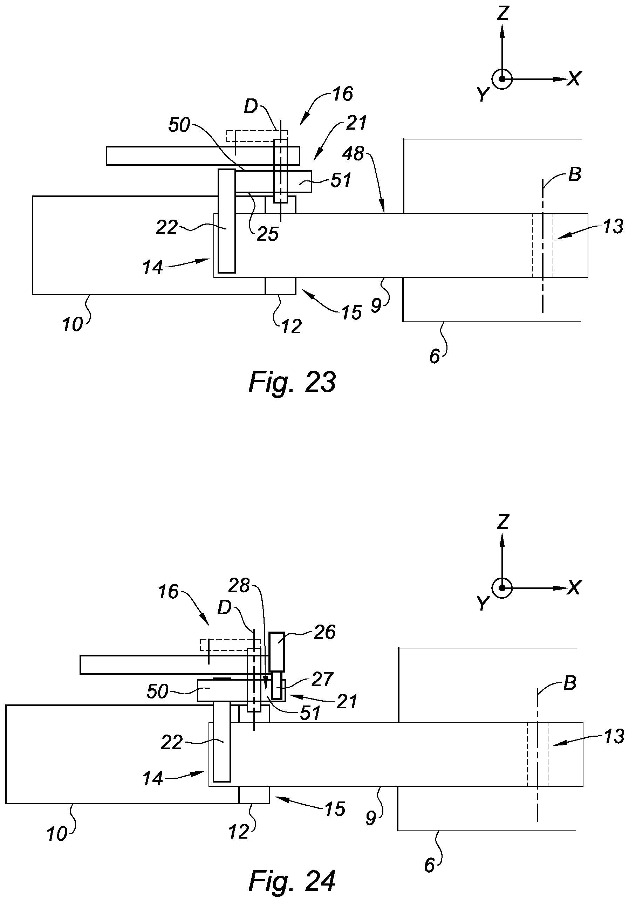

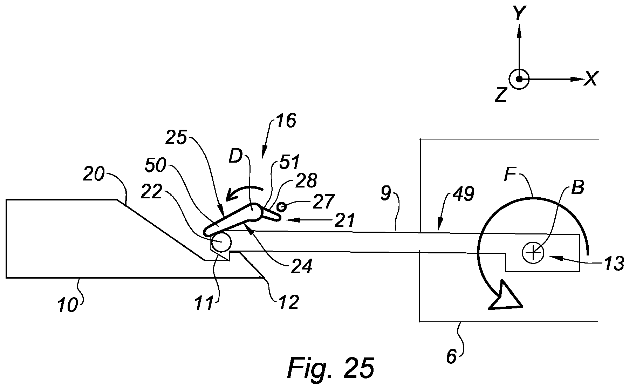

La première portion 50 est plus longue que la deuxième portion 51. La présence d'une deuxième portion 51 de la came 21 n'est pas indispensable, son utilité concerne principalement un mode de réalisation en référence aux figures 24 et 25.

L'axe pivot 53 de la came 21 peut être positionné au-dessus de la paroi inclinée 20, entre cette dernière et le deuxième organe d'accrochage 12 du deuxième élément de verrouillage 10 (non représenté).

De préférence, l'axe pivot 53 de la came 21 est positionné au-dessus du deuxième organe d'accrochage 12 du deuxième élément de verrouillage 10, tel que représenté sur les figures 17 à 23, et de telle façon que l'extrémité avant de la première portion 50 de la came 21 dépasse de peu vers l'avant la tige de guidage 22 lorsque les éléments de verrouillage 9, 10 sont verrouillés l'un à l'autre (figure 18). Cette disposition permet à la came 21 de pivoter rapidement vers sa position de repos en butée pour le déverrouillage automatique des éléments de verrouillage 9, 10 lors de la refermeture du capot mobile (figure 21), malgré la course d très courte (quelques millimètres) du déplacement de refermeture.

La came 21 est positionnée à proximité de la tige de guidage 22 de façon à ce que la face intérieure 24 de la came 21 soit en contact de la tige de guidage 22 du premier élément de verrouillage 9 lorsque le capot mobile 6 est en position de fermeture. Plus précisément, c'est la face intérieure 24 de la première portion 50 de la came 21 qui est en contact avec la tige de guidage 22.

Lorsque le capot mobile 6 est en position de fermeture (figures 17 et 18), les deux éléments de verrouillage 9, 10 sont verrouillés l'un à l'autre par coopération de leurs organes d'accrochage respectifs 11, 12. Le premier élément de verrouillage 9 est au repos et sensiblement aligné suivant la direction X.

La came 21 est en position d'appui contre le premier élément de verrouillage 9, sous l'effet du ressort de rappel de la came. Plus précisément, la face intérieure 24 de la came 21 est en appui sur la tige de guidage 22 du premier élément de verrouillage 9.

Dans la position de fermeture du capot mobile 6, le premier organe d'accrochage 11 du premier élément de verrouillage 9 est engagé dans une cavité 52 formée dans le deuxième élément de verrouillage 10 et positionnée entre le deuxième organe d'accrochage 12 et la paroi inclinée 20 du deuxième élément de verrouillage 10.

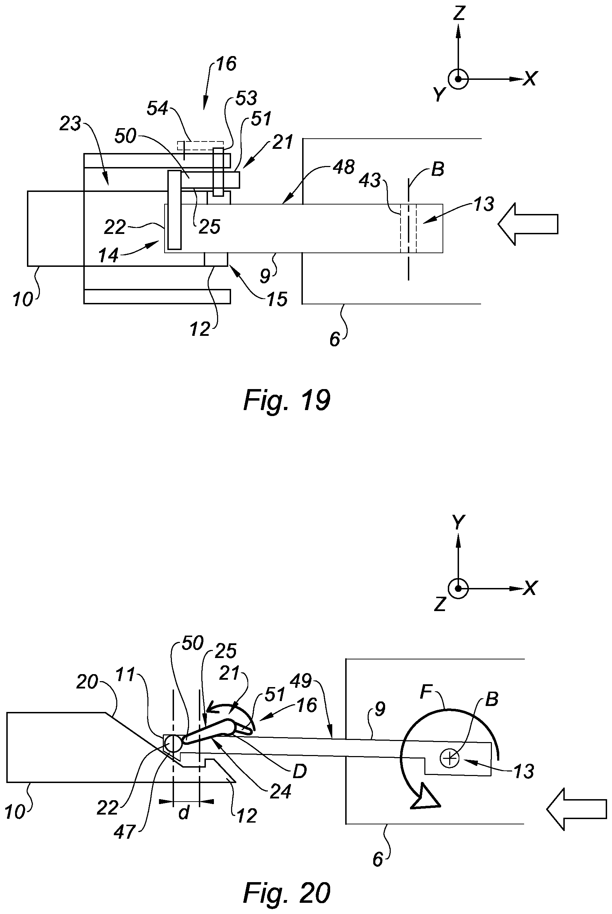

Lorsque le capot mobile 6 commence son mouvement de refermeture vers le capot fixe 5 (figures 19, 20), le premier élément de verrouillage 9 translate vers le deuxième élément de verrouillage 10 (vers l'avant).

La paroi inclinée 47 du premier élément de verrouillage 9 commence à glisser le long de la paroi inclinée 20 du deuxième élément de verrouillage 10, c'est-à-dire que le premier organe d'accrochage 11 du premier élément de verrouillage 9 remonte la paroi inclinée 20 du deuxième élément de verrouillage 10.

Selon le profil de la paroi inclinée 20, ce déplacement entraîne un mouvement de rotation plus ou moins sensible du premier élément de verrouillage 9 autour de l'axe B selon une direction opposée au deuxième élément de verrouillage 10 (sens horaire de la figure 20).

Simultanément, l'organe de guidage 22 du premier élément de verrouillage 9 glisse ou roule le long de la face intérieure 24 de la première portion 50 de la came 21. Ce déplacement peut faire légèrement pivoter la came 21 selon une direction opposée au deuxième élément de verrouillage 10 (sens horaire de la figure 20), en fonction du profil de la came et du profil de la paroi inclinée 20 du deuxième élément de verrouillage 10 qui détermine le trajet du premier organe d'accrochage 11.

En position de refermeture du capot mobile 6 (figure 21), le premier élément de verrouillage 9 a complètement translaté vers le deuxième élément de verrouillage 10.

Le premier organe d'accrochage 11 du premier élément de verrouillage 9 se trouve dans une position d'avancement maximal sur la paroi inclinée 20 du deuxième élément de verrouillage 10.

L'organe de guidage 22 du premier élément de verrouillage 9 s'est désengagé par rapport à la face intérieure 24 de la première portion 50 de la came 21, ce qui a permis à la came de pivoter vers le deuxième élément de verrouillage 10 (sens antihoraire de la figure 21) pour retrouver sa position de repos en butée, la première portion 50 de la came étant alors inclinée vers le bas.

L'organe de guidage 22 se retrouve alors en face de la paroi extérieure 25 de la came 21.

Lorsque le capot mobile 6 effectue un mouvement d'ouverture (figures 22, 23), il s'éloigne du capot fixe 5, entrainant une translation du premier élément de verrouillage 9 dans une direction opposée au deuxième élément de verrouillage 10 suivant la direction X (vers l'arrière).

La paroi inclinée 47 du premier élément de verrouillage 9 glisse le long de la paroi inclinée 20 du deuxième élément de verrouillage 10 vers le deuxième organe d'accrochage 12 du deuxième élément de verrouillage 10 jusqu'à ce que l'organe de guidage 22 vienne en contact avec la face extérieure 25 de la première portion 50 de la came 21.

La came 21 étant dans sa position de repos en butée, l'organe de guidage 22 glisse ensuite sur la face extérieure 25 de la première portion 50 de la came 21 sans que la came ne pivote. En effet, l'organe de guidage 22 du premier élément de verrouillage 9 exerce un appui qui tend à faire pivoter la came 21 dans le sens antihoraire de la figure 22, alors que la came est dans sa position de repos en butée dans ce sens. La face extérieure 25 de la première portion 50 sert donc de surface de guidage de l'organe de guidage 22 lors de l'ouverture du capot mobile à partir de sa position de refermeture.

En conséquence, l'organe d'accrochage du premier élément de verrouillage 9 est guidé par la came 21 pour effectuer un trajet d'ouverture qui est différent du trajet effectué lors de la refermeture du capot mobile 6.

La course d du premier organe d'accrochage 11 du premier élément de verrouillage 9 (ou débattement lors de la refermeture du capot mobile 6) et la raideur du joint 30 sont adaptées pour ne pas risquer un déverrouillage intempestif des organes d'accrochage 11, 12 en cas d'événement fortuit comme des fortes vibrations ou des chocs (objets étrangers, perte d'aube fan, éclatement d'un disque de turbine...) que subirait le turboréacteur 2.

En effet, l'écrasement du joint 30 sur la course d pendant la refermeture du capot mobile 6 permet un déverrouillage automatique des organes d'accrochage 11, 12. Il faut donc que la refermeture du capot mobile soit uniquement commandée, c'est-à-dire qu'elle ne puisse pas résulter d'un évènement fortuit, afin de ne pas risquer une activation fortuite du système inverseur de poussée qui aurait des conséquences catastrophiques.

La course d peut être supérieure à 3 mm, voire supérieure à 5 mm. Le joint 30 doit conserver une raideur minimale.

Selon un autre mode de réalisation représenté sur les figures 24 et 25, le système de verrouillage 8 comprend un dispositif de sécurité destiné à pallier les conséquences d'une hypothétique refermeture intempestive du capot mobile.

Le dispositif de sécurité comprend un vérin 26, positionné à proximité de la came 21 et qui comprend une tige 27 mobile apte à occuper une position déployée dans laquelle la tige 27 est sortie du vérin 26 pour venir en vis-à-vis très proche d'une face supérieure 28 de la deuxième portion 51 de la came 21 (figures 24 et 25).

Cette position déployée, dite de sécurité, est activée suite au verrouillage des organes d'accrochage 11, 12, et sa désactivation est pilotée par la commande de l'ouverture du capot mobile 6. Dans cette position de sécurité, la tige 27 est apte à servir de butée pour empêcher une rotation significative de la came 21 en cas de refermeture du capot mobile. La tige 27 peut occuper en outre une position rétractée (non représentée) dans laquelle elle est rentrée dans le vérin 26 et ne peut pas servir de butée par rapport à la came 21.

En cas de refermeture du capot mobile 6 non commandée, aucun ordre de rétractation de la tige 27 n'est envoyé au vérin 26. La tige 27 restant dans sa position déployée, elle constitue une butée de sécurité pour la came 21, en empêchant cette dernière de pivoter significativement vers sa position de repos lorsque l'organe de guidage 22 du premier élément de verrouillage 9 se déplace dans la direction de refermeture jusqu'à perdre contact avec la face intérieure 24 de la came 21. En d'autres termes, le passage de la position de la came 21 sur la figure 20 à celle de la came sur la figure 21 est rendu impossible grâce au maintien de la came 21 par la tige 27.

Dans l'exemple représenté, lors du mouvement de refermeture du capot mobile 6, le déplacement (dans le sens aller) de l'organe de guidage 22 du premier élément de verrouillage 9 fait d'abord légèrement pivoter la came 21 dans le sens horaire sur la figure 25. Puis la came 21 pivote légèrement dans l'autre sens (sens antihoraire) vers le deuxième élément de verrouillage 10 à mesure que l'organe de guidage 22 passe sous l'extrémité de la came 21, pour venir en butée contre la tige 27 du vérin 26, c'est-à-dire pour revenir quasiment dans sa position initiale.

Après le mouvement de refermeture du capot mobile 6, lorsque l'organe de guidage 22 du premier élément de verrouillage 9 revient suivant la direction X, elle est obligée de suivre le chemin inverse du sens aller, c'est à dire de repasser sous la came 21. Ceci ramène les organes d'accrochage 11, 12 dans leur position de verrouillage en faisant légèrement pivoter la came 21 dans le sens horaire, ce qui permet un relâchement de la contrainte sur la tige 27 du vérin 26.

Une ouverture non souhaitée du capot mobile 6 est donc empêchée. Le risque de déverrouillage intempestif des organes d'accrochage 11, 12 est ainsi nul ou quasiment nul grâce à cette sécurité supplémentaire.

Avantageusement, le mécanisme de sécurité n'exerce pas d'effort sur la came 21 ou sur d'autres pièces, en dehors du cas extrêmement peu probable d'une refermeture du capot mobile 6 non commandée. En d'autres termes, il n'y a pas de contact entre la tige 27 du vérin 26 et la came 21 en fonctionnement normal, comme illustré sur la figure 25. Du fait de cette absence de contact, le déplacement de la tige 27 suite au verrouillage des organes d'accrochage 11, 12 s'effectue sans contrainte extérieure sur le vérin 26.

Ce mécanisme de sécurité peut donc être simple, nécessitant peu de maintenance et d'une grande longévité.

En fonctionnement normal, la commande de l'ouverture du capot mobile 6 entraîne d'abord une refermeture commandée du capot 6. La tige 27 du vérin 26 doit alors être rétractée avant que le capot mobile 6 se déplace de sa position de refermeture vers sa position d'ouverture, afin de ne pas empêcher le déverrouillage des organes d'accrochage 11, 12. Pour ceci, l'ordre de commande de l'ouverture du capot 6 peut également servir à commander la rétractation de la tige 27.

Par ailleurs, le système de verrouillage 8 peut comprendre un moyen de blocage permettant de bloquer les éléments de verrouillage 9, 10 en position verrouillée lorsqu'un système de détection de verrouillage (par exemple un ensemble de capteurs 46 tel que décrit précédemment) a détecté le verrouillage du premier organe d'accrochage 11 du premier élément de verrouillage 9.

La sortie (position déployée) de la tige 27 du vérin 26 peut alors être commandée par le système de commande du moyen de blocage, dès lors que le système de détection de verrouillage détecte le passage d'un état déverrouillé à l'état verrouillé.

La tige 27 du vérin 26 comprend de préférence un capteur de position pour renseigner le système de commande du moyen de blocage et vérifier la bonne concordance entre la position de la tige 27 du vérin 26 et l'état du moyen de blocage.

L'énergie pour déplacer la tige 27 du vérin 26 peut être très faible, puisque cette dernière n'a pas d'effort à exercer sur une pièce.

Par exemple, le vérin 26 peut être un vérin électrique de petites dimensions.

Dans le cas où les moyens de déviation de trajet 16 comprennent deux cames 21 comme décrit en référence à la figure 16, il est possible de prévoir un pontage reliant rigidement les deux axes pivots 53 des cames afin de rendre les deux cames solidaires en mouvement l'une de l'autre. La géométrie de ce pontage, par exemple en forme de U, sera prévue pour ne pas gêner le passage du premier organe d'accrochage 11 entre les deux cames. Cet arrangement permet de n'avoir qu'un seul dispositif de sécurité tel qu'un vérin 26 pour empêcher la rotation des deux cames 21 en cas de refermeture non commandée du capot mobile 6.

Par ailleurs, dans l'exemple représenté en référence aux figures 24 et 25, le maintien de la came 21 par la tige 27 du vérin 26 s'effectue au niveau de la deuxième portion 51 de la came. En alternative, la deuxième portion 51 de la came peut être supprimée, et le vérin 26 peut être positionné de façon à ce qu'en cas de refermeture non commandée du capot mobile 6, la tige 27 du vérin puisse agir comme une butée sur le bras 54 solidaire de l'axe pivot 53 de la came pour empêcher une rotation significative de la came.

En outre, de même que dans les autres modes de réalisation précédemment décrits, le premier élément de verrouillage 9 pivotant n'est pas nécessairement monté sur le capot mobile 6. Selon une alternative non représentée, le premier élément de verrouillage 9 peut être monté pivotant sur le capot fixe 5 ou sur une autre structure fixe de la nacelle, le deuxième élément de verrouillage 10 ainsi que les moyens de déviation de trajet 16 étant alors prévus solidaires en déplacement du capot mobile 6.

Dans les modes de réalisation de l'invention précédemment décrits, les différentes réalisations du système de verrouillage 8 sont utilisées pour verrouiller un capot 6 mobile en translation sur la nacelle 1 par rapport à une structure fixe 5 constituée par un capot fixe de la nacelle, le système inverseur de poussée étant alors du type à grilles.

Un système inverseur de poussée selon l'invention n'est cependant pas limité à ce type d'inverseur, l'invention s'applique également à des inverseurs de poussée du type à portes. Dans ce type de système inverseur de poussée, un capot mobile n'effectue pas une translation mais une rotation par rapport à un axe de rotation de façon à ce que le capot lui-même constitue un déflecteur pour dévier à la fois le flux secondaire et le flux primaire globalement vers l'avant à l'extérieur de la nacelle.

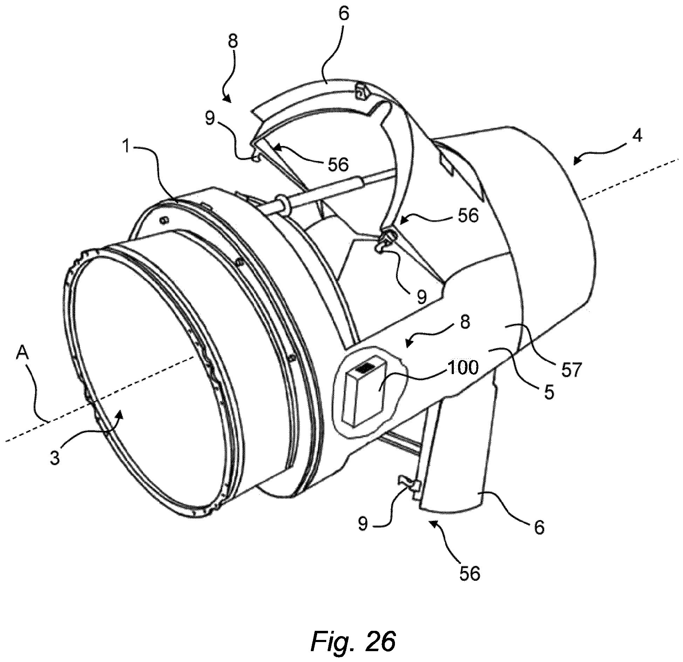

L'invention s'applique donc également à un système inverseur de poussée à portes, comprenant deux capots mobiles 6 aptes à pivoter autour de respectivement deux axes de rotations distincts, comme illustré sur la figure 26. Les « capots mobiles » 6 sont aussi appelés « portes mobiles». Ils peuvent être seulement au nombre de deux comme dans l'exemple représenté, mais des architectures à plus de deux portes existent également, par exemple à quatre portes.

Dans l'exemple représenté, les deux capots mobiles 6 sont positionnés en opposition par rapport à un axe longitudinal A du système inverseur de poussée.

Le système inverseur de poussée comprend deux systèmes de verrouillage 8 positionnés sur la nacelle 1 et en opposition par rapport à l'axe longitudinal A.

Chaque système de verrouillage 8 comprend deux premiers éléments de verrouillage 9 montés sur deux capots ou portes mobiles 6 différentes et deux deuxièmes éléments de verrouillage montés dos à dos sur une structure fixe 5 de la nacelle 1.

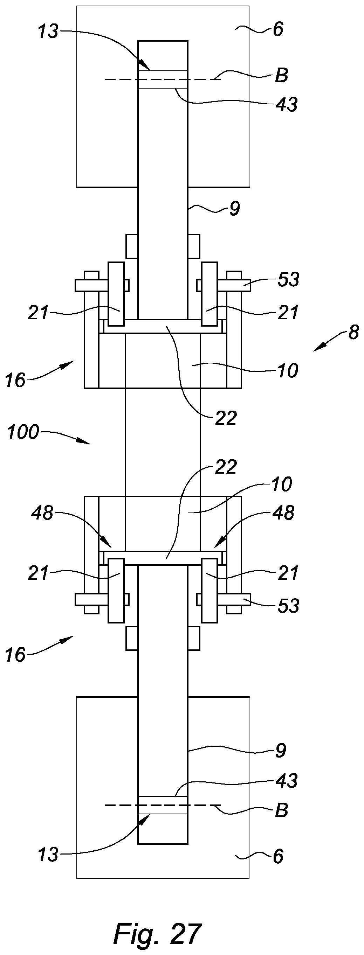

Les deux deuxièmes éléments de verrouillage 10 peuvent être réalisés sous la forme de pièces distinctes, ou peuvent constituer deux parties d'une pièce commune 100 prévue pour coopérer avec les deux premiers éléments de verrouillage 9 montés sur deux capots mobiles 6 différents, comme représenté sur les figures 26 et 27 .

Les deux premiers éléments de verrouillage 9 sont positionnés chacun au niveau d'un coin avant 56 du capot mobile 6 concerné.

Chaque pièce commune 100 comprenant deux deuxièmes éléments de verrouillage 10 est positionnée sur une paroi circonférentielle 57 de la structure fixe 5 de la nacelle 1. Dans la réalisation représentée, une seule pièce commune 100 est visible, mais il faut comprendre que deux pièces communes 100 sont diamétralement opposées sur la paroi circonférentielle 57 par rapport à l'axe longitudinal A.

Les premiers et deuxièmes éléments de verrouillage 9, 10 de chaque système de verrouillage 8 associé à un capot mobile 6 sont aptes à être verrouillés et déverrouillés l'un par rapport à l'autre afin de verrouiller le capot mobile 6 sur la structure fixe 5 dans la position de fermeture du capot mobile.

Un déplacement commandé de chaque capot mobile 6 à partir de sa position de fermeture jusqu'à une position de refermeture déclenche le déverrouillage des premier et deuxième éléments de verrouillage 9, 10 de chaque système de verrouillage 8 associé au capot mobile 6.

La refermeture d'un capot mobile 6 entraîne le déplacement des deux premiers éléments de verrouillage 9 du même capot mobile 6 en direction de l'axe longitudinal A, lors d'un mouvement de rotation du capot mobile 6 dirigé vers cet axe.

Selon un mode de réalisation possible, un système de verrouillage 8 est structurellement et fonctionnellement similaire à l'un quelconque des systèmes de verrouillage 8 illustrés sur les figures 16 à 25.

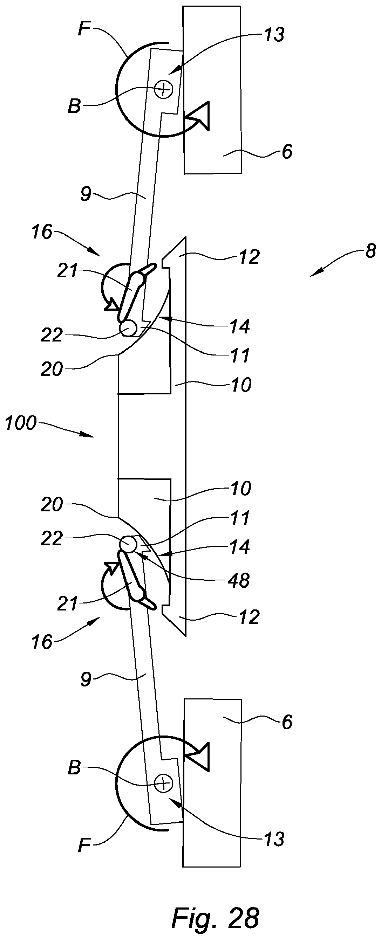

Les figures 27 et 28 décrivent plus précisément un exemple de système de verrouillage 8 structurellement et fonctionnellement similaire à celui décrit en référence à la figure 16.

Chaque premier élément de verrouillage 9 comprend une première articulation 13 présentant un axe de rotation B permettant une rotation du premier élément de verrouillage 9 entre une position de verrouillage et une position de déverrouillage par rapport au deuxième élément de verrouillage 10, lors du déplacement du capot mobile 6 entre une position de fermeture et une position de refermeture de ce dernier.

Le premier élément de verrouillage 9 comprend un ressort de rappel apte à exercer une force de rappel pour ramener le premier élément de verrouillage 9 vers le deuxième élément de verrouillage 10.

Les premiers éléments de verrouillage 9 comprennent chacun un premier organe d'accrochage 11, comme illustré sur la figure 28, pouvant être un crochet.

La pièce commune 100 comprenant deux deuxièmes éléments de verrouillage 10 comprend deux deuxième organes d'accrochage 12 pouvant être des crochets, opposés l'un par rapport à l'autre et coopérant chacun avec un premier organe d'accrochage 11 distinct.

Chaque deuxième élément de verrouillage 10 comprend un moyen de déviation de trajet 16 adapté pour que le trajet suivi par chaque premier organe d'accrochage 11 par rapport au deuxième organe d'accrochage 12 associé prenne un chemin différent entre une phase de refermeture lorsque les deux capots mobiles 6 se déplacent de leur position de fermeture vers leur position de refermeture respective et une phase d'ouverture lorsque les capots mobiles 6 se déplacent de leur position de refermeture vers leur position d'ouverture.

Les deux moyens de déviation de trajet 16 prévus sur la pièce commune 100 d'un système de verrouillage 8 sont opposés l'un par rapport à l'autre.

Les deux moyens de déviation de trajet 16 comprennent chacun une paroi inclinée 20 formée sur le deuxième élément de verrouillage 10 correspondant. Les deux parois inclinées 20 ont une orientation opposée.

L'extrémité avant 14 d'un premier élément de verrouillage 9 est destinée à glisser le long de la paroi inclinée 20 correspondante, lors du mouvement de refermeture entrainant une translation du premier organe d'accrochage 11 du premier élément de verrouillage 9.

Dans le mode de réalisation représenté, les moyens de déviation de trajet 16 comprennent chacun deux cames 21 telles que décrites précédemment. Bien entendu, en alternative une seule came 21 peut être prévue, de la même façon que dans le mode de réalisation en référence à la figure 17.

La présence de deux cames 21 implique que la tige de guidage 22 fait saillie des deux côtés latéraux 48 du premier élément de verrouillage 9.

## Revendications

1. Système inverseur de poussée pour un turboréacteur, comportant au moins un capot mobile (6) monté sur une nacelle (1) du turboréacteur et déplaçable entre une position de fermeture dans laquelle le système d'inversion de poussée est inactivé et une position d'ouverture dans laquelle le système d'inversion de poussée est activé, le système inverseur de poussée comprenant en outre au moins un système de verrouillage (8) muni d'un premier élément de verrouillage (9) et d'un deuxième élément de verrouillage (10) montés respectivement sur le capot mobile (6) et sur une structure fixe (5) de la nacelle (1), aptes à être verrouillés et déverrouillés l'un par rapport à l'autre afin de verrouiller le capot mobile (6) sur la structure fixe (5) dans la position de fermeture du capot mobile, le système de verrouillage (8) étant conformé de façon à ce qu'un déplacement commandé du capot mobile (6) à partir de sa position de fermeture jusqu'à une position de refermeture déclenche le déverrouillage des premier et deuxième éléments de verrouillage (9, 10), les premier et deuxième éléments de verrouillage (9, 10) comprenant respectivement un premier et un deuxième organes d'accrochage (11, 12), adaptés pour être accrochés l'un à l'autre dans la position verrouillée des premier et deuxième éléments de verrouillage (9, 10) de façon à empêcher ces derniers d'être écartés l'un de l'autre selon une direction d'ouverture du capot mobile (6), **caractérisé en ce que** le système de verrouillage (8) comprend des moyens de déviation de trajet (16) adaptés pour que le trajet suivi par le premier organe d'accrochage (11) par rapport au deuxième organe d'accrochage (12) prenne un chemin différent entre une phase de refermeture lorsque le capot mobile (6) se déplace de sa position de fermeture vers sa position de refermeture et une phase d'ouverture lorsque le capot mobile (6) se déplace de sa position de refermeture vers sa position d'ouverture.

2. Système inverseur de poussée selon la revendication 1, **caractérisé en ce que** le premier élément de verrouillage (9) comprend une première articulation (13) présentant un axe de rotation (B) qui, dans la position de fermeture du capot mobile, est perpendiculaire à une direction (X) de déplacement du capot mobile (6) entre la position de fermeture et la position de refermeture de ce dernier, permettant une rotation dudit premier élément de verrouillage (9) entre une position de verrouillage et une position de déverrouillage par rapport au deuxième élément de verrouillage (10).

3. Système inverseur de poussée selon la revendication 2, **caractérisé en ce que** le premier élément de verrouillage (9) comprend un ressort de rappel apte à exercer une force de rappel pour ramener le premier élément de verrouillage (9) vers le deuxième élément de verrouillage (10).

4. Système inverseur de poussée selon l'une quelconque des revendications 1 à 3, **caractérisé en ce que** les moyens de déviation de trajet (16) comprennent une paroi inclinée (18) formée sur le deuxième élément de verrouillage (10) et inclinée par rapport à un axe longitudinal (E), une deuxième articulation (17) étant prévue sur le deuxième élément de verrouillage (10), la deuxième articulation (17) présentant un axe (C) perpendiculaire à l'axe de rotation (B) du premier élément de verrouillage (9), permettant la rotation du deuxième élément de verrouillage (10) par rapport au premier élément de verrouillage (9) entre une position de verrouillage dans laquelle les deux éléments de verrouillage (9, 10) sont sensiblement alignés selon la direction (X) et une position de déverrouillage dans laquelle le deuxième élément de verrouillage (10) est incliné par rapport au premier élément de verrouillage (9), l'extrémité avant (14) du premier élément de verrouillage (9) étant destinée à glisser le long de la paroi inclinée (18) et à pousser cette dernière pour la faire pivoter de la position de verrouillage vers la position de déverrouillage.

5. Système inverseur de poussée selon l'une quelconque des revendications 1 à 3, **caractérisé en ce que** les moyens de déviation de trajet (16) comprennent une paroi inclinée (20) formée sur le deuxième élément de verrouillage (10), le deuxième élément de verrouillage (10) étant fixé sur le capot fixe (5) et le premier élément de verrouillage (9) étant monté sur le capot mobile (6) et comprenant la première articulation (13) le rendant mobile en rotation par rapport à ce dernier autour de l'axe (B), lorsque le capot mobile (6) se déplace de la position de fermeture à la position de refermeture, l'extrémité avant (14) du premier élément de verrouillage (9) étant destinée à glisser le long de ladite paroi inclinée (20) entrainant une translation du premier organe d'accrochage (11) du premier élément de verrouillage (9).

6. Système inverseur de poussée selon la revendication 5, **caractérisé en ce que** les moyens de déviation de trajet (16) comprennent au moins une came (21) montée pivotante sur un support solidaire de la structure fixe (5) ou du capot mobile (6) sur laquelle est monté le deuxième élément de verrouillage (10), et un organe de guidage (22) prévu à l'extrémité avant (14) du premier élément de verrouillage (9), ledit organe de guidage (22) étant adapté pour que son déplacement lors de ladite phase de refermeture du capot mobile (6) autorise la came (21) à pivoter vers une position de repos, ladite came (21) étant adaptée pour que lors de ladite phase d'ouverture du capot mobile (6), l'organe de guidage (22) coopère avec la came (21) maintenue dans sa position de repos de façon à guider le premier organe d'accrochage (11) selon ledit chemin différent.

7. Système inverseur de poussée selon la revendication 6, **caractérisé en ce que** les moyens de déviation (16) comprennent un ressort de rappel permettant de solliciter en rotation la came (21) vers sa position de repos.

8. Système inverseur de poussée selon l'une quelconque des revendications 6 ou 7, caractérisé en la came (21) présente une face intérieure (24) en regard du deuxième organe d'accrochage (12) et une face extérieure (25) dirigée à l'opposé du deuxième organe d'accrochage (12), l'organe de guidage (22) étant adapté pour se déplacer en appui contre ladite face intérieure (24) lors de la phase de refermeture du capot mobile (6) et en appui contre ladite face extérieure (25) lors de la phase d'ouverture du capot mobile.

9. Système inverseur de poussée selon la revendication 8, **caractérisé en ce que** l'axe (D) de la came (21) est positionné au-dessus du deuxième organe d'accrochage (12) du deuxième élément de verrouillage (10) de façon à ce que la face intérieure (24) de la came (21) soit en contact avec l'organe de guidage (22) du premier élément de verrouillage (9) lorsque le capot mobile (6) est en position de fermeture.

10. Système inverseur de poussée selon l'une quelconque des revendications 6 à 9 **caractérisé en ce que** le système de verrouillage (8) comprend un dispositif de sécurité pour empêcher la rotation de la came (21) en cas de refermeture du capot mobile (6) non commandée.

11. Système inverseur de poussée selon la revendication 10, **caractérisé en ce que** le dispositif de sécurité comprend un vérin (26) positionné à proximité de la came (21), ledit vérin (26) comprenant une tige (27) mobile entre une position déployée dans laquelle la tige (27) est sortie du vérin (26) pour bloquer la came (21) en cas de refermeture du capot mobile (6) et une position rétractée dans laquelle la tige (27) est rentrée dans le vérin (26) pour libérer la deuxième portion (51) de la came (21).

12. Procédé de déverrouillage d'un système inverseur de poussée pour un turboréacteur (2) comportant au moins un capot mobile (6) monté sur une nacelle (1) du turboréacteur et déplaçable entre une position de fermeture dans laquelle le système d'inversion de poussée est inactivé et une position d'ouverture dans laquelle le système d'inversion de poussée est activé, le système inverseur de poussée comprenant en outre au moins un système de verrouillage (8), tel que défini selon l'une quelconques des revendications 1 à 11, ledit système de verrouillage (8) étant muni d'un premier élément de verrouillage (9) et d'un deuxième élément de verrouillage (10) montés respectivement sur le capot mobile (6) et sur une structure fixe (5) de la nacelle (1), aptes à être verrouillés et déverrouillés l'un par rapport à l'autre afin de verrouiller le capot mobile (6) sur la structure fixe (5) dans la position de fermeture du capot mobile, les premier et deuxième éléments de verrouillage (9, 10) comprenant respectivement un premier et un deuxième organes d'accrochage (11, 12) accrochés l'un à l'autre dans la position verrouillée des premier et deuxième éléments de verrouillage (9, 10) de façon à empêcher ces derniers d'être écartés l'un de l'autre selon une direction d'ouverture du capot mobile (6), un déplacement commandé du capot mobile (6) à partir de sa position de fermeture jusqu'à une position de refermeture déclenchant le déverrouillage des premier et deuxième éléments de verrouillage (9, 10), **caractérisé en ce que** le trajet suivi par le premier organe d'accrochage (11) par rapport au deuxième organe d'accrochage (12) prend un chemin différent entre une phase de refermeture lorsque le capot mobile (6) se déplace de sa position de fermeture vers sa position de refermeture et une phase d'ouverture lorsque le capot mobile (6) se déplace de sa position de refermeture vers sa position d'ouverture.

13. Procédé de déverrouillage d'un système inverseur de poussée selon la revendication 12, **caractérisé en ce que**, lorsque le capot mobile (6) est en position fermée, la rotation de la came (21) est empêchée par un dispositif de sécurité (26) en cas de refermeture du capot mobile (6) non commandée.

## Patentansprüche

1. Schubumkehrsystem für einen Turboreaktor, das mindestens eine bewegliche Abdeckung (6) beinhaltet, die auf einer Gondel (1) des Turboreaktors montiert, und zwischen einer Schließposition, in der das Schubumkehrsystem deaktiviert ist, und einer Öffnungsposition verschiebbar ist, in der das Schubumkehrsystem aktiviert ist, wobei das Schubumkehrsystem weiter mindestens ein Verriegelungssystem (8) umfasst, das mit einem ersten Verriegelungselement (9) und einem zweiten Verriegelungselement (10) versehen ist, die jeweils auf der beweglichen Abdeckung (6) und einer feststehenden Struktur (5) der Gondel (1) montiert sind, imstande sind, im Verhältnis zueinander verriegelt und entriegelt zu werden, um die bewegliche Abdeckung (6) auf der feststehenden Struktur (5) in der Schließposition der beweglichen Abdeckung zu verriegeln, wobei das Verriegelungssystem (8) ausgeformt ist, sodass eine gesteuerte Verschiebung der beweglichen Abdeckung (6) aus ihrer Schließposition bis zu einer Wiederschließposition die Entriegelung des ersten und zweiten Verriegelungselements (9, 10) auslöst, wobei das erste und zweite Verriegelungselement (9, 10) jeweils ein erstes und ein zweites Einrastorgan (11, 12) umfassen, die angepasst sind, in der verriegelten Position des ersten und zweiten Verriegelungselements (9, 10) ineinander eingerastet zu werden, um zu verhindern, dass letztere in einer Öffnungsrichtung der beweglichen Abdeckung (6) voneinander entfernt werden, **dadurch gekennzeichnet, dass** das Verriegelungssystem (8) Wegumleitungsmittel (16) umfasst, die angepasst sind, damit der von dem ersten Einrastorgan (11) im Verhältnis zu dem zweiten Einrastorgan (12) verfolgte Weg zwischen einer Wiederschließphase, wenn sich die bewegliche Abdeckung (6) von ihrer Schließposition in ihre Wiederschließposition verschiebt, und einer Öffnungsphase, wenn sich die bewegliche Abdeckung (6) von ihrer Wiederschließposition in ihre Öffnungsposition verschiebt, einen anderen Verlauf nimmt.

2. Schubumkehrsystem nach Anspruch 1, **dadurch gekennzeichnet, dass** das erste Verriegelungselement (9) ein erstes Gelenk (13) umfasst, das eine Drehachse (B) aufweist, die in der Schließposition der beweglichen Abdeckung senkrecht zu einer Verschieberichtung (X) der beweglichen Abdeckung (6) zwischen der Schließposition und der Wiederschließposition von letzterer ist, wodurch eine Drehung des ersten Verriegelungselements (9) zwischen einer Verriegelungsposition und einer Entriegelungsposition im Verhältnis zu dem zweiten Verriegelungselement (10) ermöglicht wird.

3. Schubumkehrsystem nach Anspruch 2, **dadurch gekennzeichnet, dass** das erste Verriegelungselement (9) eine Rückstellfeder umfasst, die imstande ist, eine Rückstellkraft auszuüben, um das erste Verriegelungselement (9) zum zweiten Verriegelungselement (10) zurückzuführen.

4. Schubumkehrsystem nach einem der Ansprüche 1 bis 3, **dadurch gekennzeichnet, dass** die Wegumleitungsmittel (16) eine geneigte Wand (18) umfassen, die auf dem zweiten Verriegelungselement (10) gebildet ist, und im Verhältnis zu einer Längsachse (E) geneigt ist, wobei ein zweites Gelenk (17) auf dem zweiten Verriegelungselement (10) vorgesehen ist, wobei das zweite Gelenk (17) eine Achse (C) senkrecht zu der Drehachse (B) des ersten Verriegelungselements (9) aufweist, die die Drehung des zweiten Verriegelungselements (10) im Verhältnis zum ersten Verriegelungselement (9) zwischen einer Verriegelungsposition, in der die beiden Verriegelungselemente (9, 10) im Wesentlichen entlang der Richtung (X) ausgerichtet sind, und einer Entriegelungsposition, in der das zweite Verriegelungselement (10) im Verhältnis zum ersten Verriegelungselement (9) geneigt ist, ermöglicht, wobei das vordere Ende (14) des ersten Verriegelungselements (9) dazu bestimmt ist, entlang der geneigten Wand (18) zu gleiten und diese letztere zu schieben, um sie aus der Verriegelungsposition in die Entriegelungsposition schwenken zu lassen.

5. Schubumkehrsystem nach einem der Ansprüche 1 bis 3, **dadurch gekennzeichnet, dass** die Wegumleitungsmittel (16) eine geneigte Wand (20) umfassen, die auf dem zweiten Verriegelungselement (10) gebildet ist, wobei das zweite Verriegelungselement (10) an der feststehenden Abdeckung (5) befestigt ist, und das erste Verriegelungselement (9) auf der beweglichen Abdeckung (6) montiert ist, und ein erstes Gelenk (13) umfasst, das es im Verhältnis zu diesem letzteren um die Achse (B) herum drehbeweglich macht, wenn sich die bewegliche Abdeckung (6) aus der Schließposition in die Wiederschließposition verschiebt, wobei das vordere Ende (14) des ersten Verriegelungselements (9) dazu bestimmt ist, entlang der geneigten Wand (20) zu gleiten, wodurch eine Translation des ersten Einrastorgans (11) des ersten Verriegelungselements (9) angetrieben wird.

6. Schubumkehrsystem nach Anspruch 5, **dadurch gekennzeichnet, dass** die Wegumleitungsmittel (16) mindestens einen Nocken (21) umfassen, der schwenkbar auf einer Halterung montiert ist, die fest mit der feststehenden Struktur (5) oder der beweglichen Abdeckung (6) verbunden ist, auf der das zweite Verriegelungselement (10) montiert ist, und ein Führungsorgan (22), das am vorderen Ende (14) des ersten Verriegelungselements (9) vorgesehen ist, wobei das Führungsorgan (22) angepasst ist, damit seine Verschiebung in der Wiederschließphase der beweglichen Abdeckung (6) den Nocken (21) autorisiert, in eine Ruheposition zu schwenken, wobei der Nocken (21) angepasst ist, damit bei der Öffnungsphase der beweglichen Abdeckung (6) das Führungsorgan (22) mit dem in seiner Ruheposition gehaltenen Nocken (21) zusammenwirkt, um das erste Einrastorgan (11) entlang des anderen Verlaufs zu führen.

7. Schubumkehrsystem nach Anspruch 6, **dadurch gekennzeichnet, dass** die Umleitungsmittel (16) eine Rückstellfeder umfassen, die es ermöglicht, den Nocken (21) in eine Drehung in dessen Ruheposition zu versetzen.

8. Schubumkehrsystem nach einem der Ansprüche 6 oder 7, **dadurch gekennzeichnet, dass** der Nocken (21) eine Innenseite (24) gegenüber dem zweiten Einrastorgan (12) aufweist, und eine Außenseite (25), die entgegengesetzt zu dem zweiten Einrastorgan (12) gerichtet ist, wobei das Führungsorgan (22) angepasst ist, um sich in der Wiederschließphase der beweglichen Abdeckung (6) auf Auflage an der Innenseite (24), und in der Öffnungsphase der beweglichen Abdeckung auf Auflage an der Außenseite (25) zu verschieben.

9. Schubumkehrsystem nach Anspruch 8, **dadurch gekennzeichnet, dass** die Achse (D) des Nockens (21) über dem zweiten Einrastorgan (12) des zweiten Verriegelungselements (10) positioniert ist, sodass die Innenseite (24) des Nockens (21) in Kontakt mit dem Führungsorgan (22) des ersten Verriegelungselements (9) ist, wenn die bewegliche Abdeckung (6) in Schließposition ist.

10. Schubumkehrsystem nach einem der Ansprüche 6 bis 9, **dadurch gekennzeichnet, dass** das Verriegelungssystem (8) eine Sicherheitsvorrichtung umfasst, um die Drehung des Nockens (21) im Falle eines ungesteuerten Wiederschließens der beweglichen Abdeckung (6) zu verhindern.

11. Schubumkehrsystem nach Anspruch 10, **dadurch gekennzeichnet, dass** die Sicherheitsvorrichtung einen Zylinder (26) umfasst, der in der Nähe des Nockens (21) positioniert ist, wobei der Zylinder (26) eine zwischen einer ausgefahrenen Position, in der die Stange (27) aus dem Zylinder (26) ausgefahren ist, um den Nocken (21) im Falle eines Wiederschließens der beweglichen Abdeckung (6) zu blockieren, und einer eingezogenen Position bewegliche Stange (27) umfasst, in der die Stange (27) in den Zylinder (26) eingefahren ist, um den zweiten Abschnitt (51) des Nockens (21) freizugeben.

12. Verfahren zum Entriegeln eines Schubumkehrsystems für einen Turboreaktor (2), das mindestens eine bewegliche Abdeckung (6) beinhaltet, die auf einer Gondel (1) des Turboreaktors montiert, und zwischen einer Schließposition, in der das Schubumkehrsystem deaktiviert ist, und einer Öffnungsposition verschiebbar ist, in der das Schubumkehrsystem aktiviert ist, wobei das Schubumkehrsystem weiter mindestens ein Verriegelungssystem (8) nach einem der Ansprüche 1 bis 11 umfasst, wobei das Verriegelungssystem (8) mit einem ersten Verriegelungselement (9) und einem zweiten Verriegelungselement (10) versehen ist, die jeweils auf der beweglichen Abdeckung (6) und auf einer feststehenden Struktur (5) der Gondel (1) montiert sind, imstande sind, im Verhältnis zueinander verriegelt und entriegelt zu werden, um die bewegliche Abdeckung (6) auf der feststehenden Struktur (5) in der Schließposition der beweglichen Abdeckung zu verriegeln, wobei das erste und zweite Verriegelungselement (9, 10) jeweils ein erstes und ein zweites Einrastorgan (11, 12) umfassen, die in der verriegelten Position des ersten und zweiten Verriegelungselements (9, 10) ineinander eingerastet sind, um zu verhindern, dass diese letzteren in einer Öffnungsrichtung der beweglichen Abdeckung (6) voneinander entfernt werden, wobei eine gesteuerte Verschiebung der beweglichen Abdeckung (6) aus ihrer Schließposition bis zu einer Wiederschließposition die Entriegelung des ersten und zweiten Verriegelungselements (9, 10) auslöst, **dadurch gekennzeichnet, dass** der von dem ersten Einrastorgan (11) im Verhältnis zu dem zweiten Einrastorgan (12) verfolgte Weg zwischen einer Wiederschließphase, wenn sich die bewegliche Abdeckung (6) aus ihrer Schließposition in ihre Wiederschließposition verschiebt, und einer Öffnungsphase, wenn sich die bewegliche Abdeckung (6) von ihrer Wiederschließposition in ihre Öffnungsposition verschiebt, einen anderen Verlauf nimmt.

13. Verfahren zum Entriegeln eines Schubumkehrsystems nach Anspruch 12, **dadurch gekennzeichnet, dass**, wenn die bewegliche Abdeckung (6) in geschlossener Position ist, die Drehung des Nockens (21) im Falle des ungesteuerten Wiederschließens der beweglichen Abdeckung (6) durch eine Sicherheitsvorrichtung (26) verhindert wird.

## Claims

1. A thrust reverser system for a turbojet engine, including at least one movable cowl (6) mounted on a nacelle (1) of the turbojet engine and displaceable between a closing position in which the thrust reverser system is inactivated and an opening position in which the thrust reverser system is activated, the thrust reverser system further comprising at least one locking system (8) provided with a first locking element (9) and a second locking element (10) respectively mounted on the movable cowl (6) and on a fixed structure (5) of the nacelle (1), adapted to be locked and unlocked relative to each other in order to lock the movable cowl (6) on the fixed structure (5) in the closing position of the movable cowl, the locking system (8) being shaped so that a controlled displacement of the movable cowl (6) from its closing position up to a reclosing position triggers the unlocking of the first and second locking elements (9, 10), the first and second locking elements (9, 10) comprising respectively a first and a second hooking members (11, 12), adapted to be hooked to each other in the locked position of the first and second locking elements (9, 10) so as to prevent the latter from being separated from each other in a direction of opening the movable cowl (6), **characterized in that** the locking system (8) comprises path deflecting means (16) adapted so that the path followed by the first hooking member (11) relative to the second hooking member (12) takes a different path between a reclosing phase when the movable cowl (6) is displaced from its closing position to its reclosing position and an opening phase when the movable cowl (6) is displaced from its closing position to its opening position.

2. The thrust reverser system according to claim 1, **characterized in that** the first locking element (9) comprises a first hinge (13) having an axis of rotation (B) which, in the closing position of the movable cowl, is perpendicular to a direction (X) of displacing the movable cowl (6) between the closing position and the reclosing position of the latter, allowing a rotation of said first locking element (9) between a locked position and an unlocked position relative to the second locking element (10).

3. The thrust reverser system according to claim 2, **characterized in that** the first locking element (9) comprises a return spring adapted to exert a return force to bring the first locking element (9) towards the second locking element (10).

4. The thrust reverser system according to any one of claims 1 to 3, **characterized in that** the path deflecting means (16) comprise an inclined wall (18) formed on the second locking element (10) and inclined relative to a longitudinal axis (E), a second hinge (17) being provided on the second locking element (10), the second hinge (17) having an axis (C) perpendicular to the axis of rotation (B) of the first locking element (9), allowing the rotation of the second locking element (10) relative to the first locking element (9) between a locking position in which the two locking elements (9,10) are substantially aligned according to the direction (X) and an unlocking position in which the second locking element (10) is inclined relative to the first locking element (9), the front end (14) of the first locking element (9) being intended to slide along the inclined wall (18) and to push the latter to rotate it from the locked position to the unlocked position.

5. The thrust reverser system according to any one of claims 1 to 3, **characterized in that** the path deflecting means (16) comprise an inclined wall (20) formed on the second locking element (10), the second locking element (10) being fastened on the fixed cowl (5) and the first locking element (9) being mounted on the movable cowl (6) and comprising the first hinge (13) making it rotatably movable relative to this latter about the axis (B), when the movable cowl (6) is displaced from the closing position to the reclosing position, the front end (14) of the first locking element (9) being intended to slide along said inclined wall (20) resulting in a translation of the first hooking member (11) of the first locking element (9).

6. The thrust reverser system according to claim 5, **characterized in that** the path deflecting means (16) comprise at least one cam (21) pivotally mounted on a support secured to the fixed structure (5) or to the movable cowl (6) on which the second locking element (10) is mounted, and one guide member (22) provided at the front end (14) of the first locking element (9), said guide member (22) being adapted so that its displacement during said reclosing phase of the movable cowl (6) authorizes the cam (21) to pivot towards a rest position, said cam (21) being adapted so that during said opening phase of the movable cowl (6), the guide member (22) cooperates with the cam (21) held in its rest position so as to guide the first hooking member (11) along said different path.

7. The thrust reverser system according to claim 6, **characterized in that** the deflecting means (16) comprise a return spring allowing to rotatably bias the cam (21) towards its rest position.

8. The thrust reverser system according to any one of claims 6 or 7, **characterized in that** the cam (21) has an internal face (24) facing the second hooking member (12) and an external face (25) directed opposite the second hooking member (12), the guide member (22) being adapted to be displaced for bearing against said internal face (24) during the reclosing phase of the movable cowl (6) and bearing against said external face (25) during the opening phase of the movable cowl.

9. The thrust reverser system according to claim 8, **characterized in that** the axis (D) of the cam (21) is positioned above the second hooking member (12) of the second locking element (10) so that the internal face (24) of the cam (21) is in contact with the guide member (22) of the first locking element (9) when the movable cowl (6) is in the closing position.

10. The thrust reverser system according to any one of claims 6 to 9 **characterized in that** the locking system (8) comprises a safety device to prevent rotation of the cam (21) in the case of an uncontrolled reclosing of the movable cowl (6).

11. The thrust reverser system according to claim 10, **characterized in that** the safety device comprises a cylinder (26) positioned near the cam (21), said cylinder (26) comprising a rod (27) movable between a deployed position in which the rod (27) exits the cylinder (26) to block the cam (21) in the case of a reclosing of the movable cowl (6) and a retracted position in which the rod (27) retracts into the cylinder (26) to release the second portion (51) of the cam (21).

12. A method for unlocking a thrust reverser system for a turbojet engine (2) including at least one movable cowl (6) mounted on a nacelle (1) of the turbojet engine and displaceable between a closing position in which the thrust reverser system is inactivated and an opening position in which the thrust reverser system is activated, the thrust reverser system further comprising at least one locking system (8), as defined in any one of claims 1 to 11, said locking system (8) being provided with a first locking element (9) and a second locking element (10) mounted respectively on the movable cowl (6) and on a fixed structure (5) of the nacelle (1), adapted to be locked and unlocked relative to each other in order to lock the movable cowl (6) on the fixed structure (5) in the closing position of the movable cowl, the first and second locking elements (9, 10) comprising respectively a first and a second hooking member (11, 12) hooked to each other in the locked position of the first and second locking elements (9, 10) so as to prevent the latter from being separated from each other in a direction of opening the movable cowl (6), a controlled displacement of the movable cowl (6) from its closing position up to a reclosing position triggering the unlocking of the first and second locking elements (9, 10), **characterized in that** the path followed by the first hooking member (11) relative to the second hooking member (12) takes a different path between a reclosing phase when the movable cowl (6) is displaced from its closing position to its reclosing position and an opening phase when the movable cowl (6) is displaced from its reclosing position to its opening position.

13. The method for unlocking a thrust reverser system according to claim 12, **characterized in that**, when the movable cowl (6) is in the closed position, the rotation of the cam (21) is prevented by a safety device (26) in the case of an uncontrolled reclosing of the movable cowl (6).
